# EUROPEAN PATENT APPLICATION

(11) **EP 4 586 680 A1**
(43) Date of publication of application: **16.07.2025**
(21) Application number: 23870343.3
(22) Date of filing: 13.09.2023
(51) Int. Cl.: H04W 28/02

(54) **COMMUNICATION METHOD AND APPARATUS, AND COMPUTER-READABLE STORAGE MEDIUM**

(30) Priority: 26.09.2022 CN 202211175255
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: Maiwald GmbH
(86) International application number: PCT/CN2023/118640
(87) International publication number: WO 2024/067106

(57) **Abstract**

Embodiments of this application provide a communication method and apparatus, and a computer-readable storage medium. The communication method may include: A terminal device receives a first indication from a network device. The first indication includes a first configuration of a data radio bearer DRB of the terminal device or a first configuration of a first logical channel LCH or a second LCH corresponding to the DRB, and the first configuration indicates to trigger a buffer status report BSR when a first duration expires and to-be-transmitted data on the first LCH or the second LCH meets a first condition. According to embodiments of this application, the BSR can be triggered in a timely manner, avoiding a data loss, helping assist the network device in adjusting a scheduling policy, and improving communication quality.

## Description

This application claims priority to Chinese Patent Application No. 202211175255.2, filed with the China National Intellectual Property Administration on September 26, 2022 and entitled "COMMUNICATION METHOD AND APPARATUS, AND COMPUTER-READABLE STORAGE MEDIUM", which is incorporated herein by reference in its entirety.

### TECHNICAL FIELD

This application relates to the field of communication technologies, and in particular, to a communication method and apparatus, and a computer-readable storage medium.

### BACKGROUND

In long term evolution (long term evolution, LTE) and new radio (new radio, NR), a terminal device may trigger a buffer status report (buffer status report, BSR) to notify a network device (for example, a base station or a relay node) that there is uplink to-be-transmitted data.

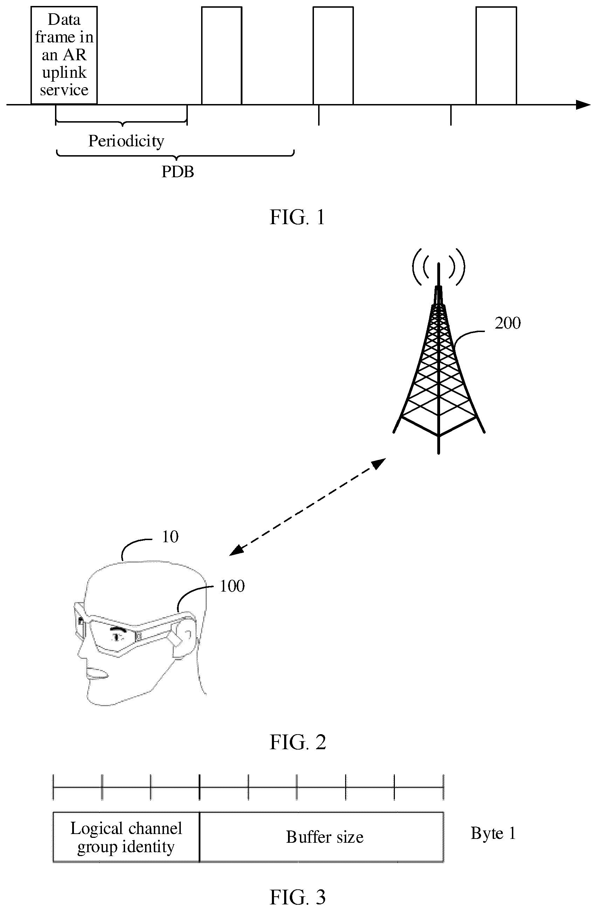

Currently, the terminal device triggers the BSR only when a specific event occurs, for example, when uplink data arrives on a logical channel (logical channel, LCH) in a logical channel group (logical channel group, LCG), and none of other LCHs included in an LCG have to-be-transmitted data, or a priority of the LCH is higher than priorities of all other LCHs that are included in an LCG and that have to-be-transmitted data. As shown in FIG. 1, a periodicity of a data frame in an augmented reality (augmented reality, AR) uplink service is less than a PDB. When a new data frame arrives, a data radio bearer (data radio bearer, DRB) for carrying the data frame may have a previous data frame whose transmission is not completed. In this case, the BSR cannot be triggered. Because a network side knows only information about the previous data frame, the new data frame may not be scheduled.

### SUMMARY

Embodiments of this application disclose a communication method and apparatus, and a computer-readable storage medium, to trigger a BSR in a timely manner, avoiding a data loss, helping assist a network device in adjusting a scheduling policy, and improving communication quality.

According to a first aspect, an embodiment of this application discloses a first communication method, applied to a terminal device, and including: The terminal device receives a first indication from a network device. The terminal device triggers a BSR.

The first indication includes a first configuration of a data radio bearer (data radio bearer, DRB) of the terminal device or a first configuration of a first LCH or a second LCH corresponding to the DRB, and the first configuration indicates to trigger the BSR when a first duration expires and to-be-transmitted data on the first LCH or the second LCH meets a first condition.

The first indication in this application may be radio resource control (radio resource control, RRC) signaling. In this application, one DRB is used as an example for description. Actually, the first indication may include a first configuration of each of a plurality of DRBs. In this embodiment of this application, an LCH corresponding to the DRB is referred to as the first LCH, and a quantity of first LCHs may be 1 or greater than 1. The second LCH may include the first LCH or may not include the first LCH.

The network device may separately configure the DRB, the first LCH, or the second LCH, to obtain a respective first configuration. Alternatively, the first LCH may be configured when the DRB is configured. Alternatively, all DRBs and LCHs may be configured, and an indication parameter, for example, timeoutBSRTriggered, is used in the first indication to indicate whether the first configuration is performed on a corresponding DRB or LCH. For example, that timeoutBSRTriggered of an LCH₂ is 1 indicates that a method corresponding to the first configuration is performed on the LCH₂; and that timeoutBSRTriggered of an LCH₃ is 0 indicates that the method corresponding to the first configuration is not performed on the LCH₃, and a communication method specified in a conventional technology or another standard may be performed.

It may be understood that, after the terminal device receives the first indication from the network device, the terminal device determines, based on the first configuration of the DRB or the first configuration of the first LCH or the second LCH corresponding to the DRB in the first indication, whether the to-be-transmitted data meets the first condition when an arrival duration of to-be-transmitted data arriving on the first LCH or the second LCH is the first duration. If the to-be-transmitted data meets the first condition, the BSR may be triggered. In this way, the BSR can be triggered in a timely manner, avoiding a data loss, helping assist the network device in adjusting a scheduling policy, and improving communication quality.

In some feasible examples, the communication method further includes: The terminal device performs timing or countdown based on the first duration. If the to-be-transmitted data meets a second condition within the first duration, the terminal device stops timing or countdown, where the second condition and the first condition are complementary. Alternatively, when the first duration expires, the terminal device determines that the to-be-transmitted data meets the first condition. In other words, the terminal device may determine, within the first duration, whether the to-be-transmitted data meets the second condition. If the to-be-transmitted data meets the second condition, the terminal device stops timing or countdown. Otherwise, when the first duration expires, the terminal device may determine that the to-be-transmitted data meets the first condition, and the BSR may be triggered. Alternatively, when the first duration expires, the terminal device may determine whether the to-be-transmitted data meets the first condition, to trigger the BSR when the to-be-transmitted data meets the first condition.

In some feasible examples, the first duration is less than an upper delay limit, and the upper delay limit includes a packet delay budget (packet delay budget, PDB) or a protocol data unit set delay budget (protocol data unit set delay budget, PSDB). In this way, whether to trigger the BSR is determined by using the first duration less than the upper delay limit, to trigger the BSR in a timely manner, avoiding a data loss, helping assist the network device in adjusting a scheduling policy, and improving communication quality.

In some feasible examples, the first condition includes at least one of the following: The to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, and buffer status information of the to-be-transmitted data is not sent.

It may be understood that, that the to-be-transmitted data is not sent indicates that the to-be-transmitted data needs to be sent, and the BSR may be triggered. The remaining to-be-transmitted data in the to-be-transmitted data is to-be-transmitted data that is not sent, the proportion of the remaining to-be-transmitted data in the to-be-transmitted data is equal to a ratio of the remaining to-be-transmitted data to the to-be-transmitted data. That the data volume of the remaining to-be-transmitted data in the to-be-transmitted data is greater than the first threshold or the proportion of the remaining to-be-transmitted data in the to-be-transmitted data is greater than the second threshold indicates that a large volume of to-be-transmitted data that is not transmitted needs to be sent, and the BSR may be triggered. The buffer status information of the to-be-transmitted data is information sent after the BSR is triggered, may include a data volume of to-be-transmitted data that arrives latest, and may further include a data volume of remaining to-be-transmitted data, a remaining PDB or a remaining PSDB, jitter information upon arrival of to-be-transmitted data, and the like. If the buffer status information of the to-be-transmitted data is not sent, it indicates that the BSR is not triggered, and the BSR may be triggered.

In some feasible examples, the first configuration further indicates to report, when the BSR is triggered, buffer status information of the LCH and/or an LCG to which the to-be-transmitted data belongs and buffer status information of associated data associated with the LCH to which the to-be-transmitted data belongs, and the buffer status information includes at least the data volume of the to-be-transmitted data that arrives latest. The associated data may be understood as data related to a service that triggers the BSR, and the service that triggers the BSR is a service that meets a BSR trigger condition (the first condition in the first aspect). In other words, when the to-be-transmitted data on the first LCH or the second LCH meets the first condition, a service corresponding to the to-be-transmitted data may be referred to as a service that triggers the BSR. For example, an (application) service includes video data and audio data. When the video data is used as the to-be-transmitted data on the first LCH and meets the BSR trigger condition, the associated data may include the audio data. Alternatively, the associated data includes key frame data and non-key frame data in the video data. In this way, the terminal device may send, to the network device, the buffer status information of the LCH and/or the LCG to which the to-be-transmitted data belongs and the buffer status information of the associated data, so that the network device can obtain data arrival and buffering of the data related to the service that triggers the BSR. This helps assist the network device in adjusting a scheduling policy, and improves communication quality. In addition, sending buffer status information of all LCHs is avoided, so that signaling overheads can be reduced.

In some feasible examples, the buffer status information further includes at least one of the following: the data volume of the remaining to-be-transmitted data, a data volume of remaining to-be-transmitted data other than the to-be-transmitted data that arrives latest, an identifier or an indication indicating that to-be-transmitted data exists, a remaining PDB or a remaining PSDB of to-be-transmitted data, and jitter information upon arrival of to-be-transmitted data.

The foregoing data volumes may be values in unit of bytes or Kbytes, or each data volume may be an index value, and the index value may be used to obtain a value of the data volume. The to-be-transmitted data may be all to-be-transmitted data, may be to-be-transmitted data that arrives earliest or latest, or may be to-be-transmitted data of a specified type (for example, an uplink service, an AR service, or an I frame in the AR service). The identifier indicating that the to-be-transmitted data exists may be an ID of an LCH or an LCG in which the to-be-transmitted data exists. The indication indicating that the to-be-transmitted data exists may indicate whether each LCH or LCG in which to-be-transmitted data exists has to-be-transmitted data, or may indicate whether each LCH or LCG in which to-be-transmitted data exists has an indication value corresponding to buffer information reporting, for example, a bitmap.

The remaining PDB or the remaining PSDB may be a value in unit of ms, or may be another index value, and the index value may be used to obtain a time value of the remaining PDB or the remaining PSDB. The jitter information may be a deviation between an actual arrival moment of the to-be-transmitted data and an arrival moment expected by the terminal device, a deviation between the arrival moment of the to-be-transmitted data and an arrival moment of a previous piece of to-be-transmitted data, or the like. The jitter information may be a value in unit of ms/slot/symbol, or may be another index value, and the index value may be used to obtain a time value of the jitter information.

It may be understood that the terminal device may report at least one of the foregoing buffer status information, to help assist the network device in properly allocating a resource and adjusting a scheduling policy in a timely manner, and improve communication quality.

In some feasible examples, when the to-be-transmitted data on the first LCH meets the first condition, the associated data includes an LCH and/or an LCG associated with the first LCH. Alternatively, when the to-be-transmitted data on the second LCH meets the first condition, the associated data includes an LCH and/or an LCG associated with the second LCH. The communication method further includes: The terminal device receives first information from the network device, where the first information indicates the LCH and/or the LCG associated with the first LCH or the second LCH. The terminal device determines the associated data based on the first information. In this way, the terminal device may determine the associated data based on the LCH or the LCG associated with the DRB, or may determine the associated data based on the first information sent by the network device, so that accuracy of determining the associated data can be improved.

Correspondingly, in some feasible examples, the second condition may include at least one of the following: The to-be-transmitted data is sent, the data volume of the remaining to-be-transmitted data in the to-be-transmitted data is less than or equal to the first threshold, the proportion of the remaining to-be-transmitted data in the to-be-transmitted data is less than or equal to the second threshold, and the buffer status information of the to-be-transmitted data is sent. It may be understood that the terminal device may determine, based on at least one item of the second condition, whether to stop timing or countdown, to help trigger the BSR in a timely manner.

In some feasible examples, the first condition further includes that the buffer status information of the associated data is not sent. It may be understood that, that the buffer status information of the associated data is not sent indicates that the buffer status information of the associated data needs to be sent, and the BSR may be triggered.

Correspondingly, in some feasible examples, the second condition further includes that the buffer status information of the associated data is sent. It may be understood that, that the buffer status information of the associated data is sent indicates that the BSR has been triggered, and the BSR may no longer be triggered, so that timing or countdown is stopped.

In some feasible examples, a data type of the to-be-transmitted data includes at least one of the following: data packet, data frame, and data burst.

According to a second aspect, an embodiment of this application discloses a second communication method, applied to a network device, and including: The network device sends a first indication to a terminal device. The network device receives buffer status information of a first LCG from the terminal device. The first indication includes a first configuration of a DRB of the terminal device or a first configuration of a first LCH or a second LCH corresponding to the DRB, the first configuration indicates to trigger a BSR when a first duration expires and to-be-transmitted data on the first LCH or the second LCH meets a first condition, and the first LCG includes an LCG corresponding to the first LCH and an LCG corresponding to the second LCH. In this way, the BSR can be triggered in a timely manner, avoiding a data loss, helping assist the network device in adjusting a scheduling policy, and improving communication quality.

In some feasible examples, the first condition includes at least one of the following: The to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, and buffer status information of the to-be-transmitted data is not sent. In this way, whether to trigger the BSR is determined based on at least one item of the first condition, to help trigger the BSR in a timely manner.

In some feasible examples, the first duration is less than an upper delay limit, and the upper delay limit includes a PDB or a PSDB. In this way, whether to trigger the BSR is determined by using the first duration less than the upper delay limit, to trigger the BSR in a timely manner, avoiding a data loss, helping assist the network device in adjusting a scheduling policy, and improving communication quality.

In some feasible examples, a data type of the to-be-transmitted data includes at least one of the following: data packet, data frame, and data burst.

According to a third aspect, an embodiment of this application discloses a third communication method, applied to a network device, and including: The network device sends a first indication to a terminal device. The network device receives, from the terminal device, buffer status information of an LCH and/or an LCG to which to-be-transmitted data belongs and buffer status information of associated data. The first indication includes a first configuration of a DRB of the terminal device or a first configuration of a first LCH or a second LCH corresponding to the DRB, the first configuration indicates to trigger a BSR when a first duration expires and to-be-transmitted data on the first LCH or the second LCH meets a first condition, the first configuration further indicates to report, when the BSR is triggered, the buffer status information of the LCH and/or the LCG to which the to-be-transmitted data belongs and the buffer status information of the associated data associated with the LCH to which the to-be-transmitted data belongs, and the buffer status information includes at least a data volume of to-be-transmitted data that arrives latest.

It may be understood that, after the terminal device receives the first indication from the network device, the terminal device determines, based on the first configuration of the DRB or the first configuration of the first LCH or the second LCH corresponding to the DRB in the first indication after the to-be-transmitted data arrives on the first LCH or the second LCH, whether the to-be-transmitted data meets the first condition when the first duration expires. If the to-be-transmitted data meets the first condition, the BSR may be triggered. In this way, the BSR can be triggered in a timely manner, so that a data loss can be avoided. In addition, when the BSR is triggered, the buffer status information of the LCH and/or the LCG to which the to-be-transmitted data that meets the first condition belongs and the buffer status information of the associated data may be further sent to the network device, so that the network device can obtain data arrival and buffering of data related to a service that triggers the BSR. This helps assist the network device in adjusting a scheduling policy, and improves communication quality. In addition, sending buffer status information of all LCHs is avoided, so that signaling overheads can be reduced.

In some feasible examples, the first condition includes at least one of the following: The to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, the buffer status information of the to-be-transmitted data is not sent, and the buffer status information of the associated data is not sent. In this way, the terminal device may determine, based on at least one item of the first condition, whether to trigger the BSR, to help trigger the BSR in a timely manner.

Correspondingly, in some feasible examples, the second condition may include at least one of the following: The to-be-transmitted data is sent, the data volume of the remaining to-be-transmitted data in the to-be-transmitted data is less than or equal to the first threshold, the proportion of the remaining to-be-transmitted data in the to-be-transmitted data is less than or equal to the second threshold, the buffer status information of the to-be-transmitted data is sent, and the buffer status information of the associated data is sent. It may be understood that the terminal device may determine, based on at least one item of the second condition, whether to stop timing or countdown, to help trigger the BSR in a timely manner.

In some feasible examples, the buffer status information further includes at least one of the following: the data volume of the remaining to-be-transmitted data, a data volume of remaining to-be-transmitted data other than the to-be-transmitted data that arrives latest, an identifier or an indication indicating that to-be-transmitted data exists, a remaining PDB or a remaining PSDB of to-be-transmitted data, and jitter information upon arrival of to-be-transmitted data. In this way, the terminal device may report at least one of the foregoing buffer status information, to help assist the network device in properly allocating a resource and adjusting a scheduling policy in a timely manner, and improve communication quality.

In some feasible examples, when the to-be-transmitted data on the first LCH meets the first condition, the associated data includes an LCH and/or an LCG associated with the first LCH. Alternatively, when the to-be-transmitted data on the second LCH meets the first condition, the associated data includes an LCH and/or an LCG associated with the second LCH. The communication method further includes: The network device sends first information to the terminal device, where the first information indicates the LCH and/or the LCG associated with the first LCH or the second LCH. In this way, the terminal device may determine the associated data based on the LCH or the LCG associated with the DRB, or may determine the associated data based on the first information sent by the network device, so that accuracy of determining the associated data can be improved.

In some feasible examples, the first duration is less than an upper delay limit, and the upper delay limit includes a PDB or a PSDB. In this way, whether to trigger the BSR is determined by using the first duration less than the upper delay limit, to trigger the BSR in a timely manner, avoiding a data loss, helping assist the network device in adjusting a scheduling policy, and improving communication quality.

In some feasible examples, a data type of the to-be-transmitted data includes at least one of the following: data packet, data frame, and data burst.

According to a fourth aspect, an embodiment of this application discloses a fourth communication method, applied to a terminal device, and including: The terminal device receives a second indication from a network device. The terminal device triggers a BSR, to send, to the network device, buffer status information of an LCH and/or an LCG to which to-be-transmitted data belongs and buffer status information of associated data. The second indication includes a second configuration of a DRB of the terminal device or a second configuration of a first LCH or a second LCH corresponding to the DRB, the second configuration indicates to report, when the to-be-transmitted data on the first LCH or the second LCH meets a BSR trigger condition, the buffer status information of the LCH and/or the LCG to which the to-be-transmitted data belongs and the buffer status information of the associated data associated with the LCH to which the to-be-transmitted data belongs, and the buffer status information includes at least a data volume of to-be-transmitted data that arrives latest.

It may be understood that, after the terminal device receives the second indication from the network device, when the BSR is triggered, the terminal device sends, to the network device, the buffer status information of the LCH and/or the LCG to which the to-be-transmitted data belongs and the buffer status information of the associated data, so that the network device can obtain data arrival and buffering of data related to a service that triggers the BSR. This helps assist the network device in adjusting a scheduling policy, and improves communication quality. In addition, sending buffer status information of all LCHs is avoided, so that signaling overheads can be reduced.

In some feasible examples, when the to-be-transmitted data on the first LCH meets the BSR trigger condition, the associated data includes an LCH and/or an LCG associated with the first LCH. Alternatively, when the to-be-transmitted data on the second LCH meets the BSR trigger condition, the associated data includes an LCH and/or an LCG associated with the second LCH. The communication method further includes: The terminal device receives first information from the network device, where the first information indicates the LCH and/or the LCG associated with the first LCH or the second LCH. The terminal device determines the associated data based on the first information. In this way, the terminal device may determine the associated data based on the LCH or the LCG associated with the DRB, or may determine the associated data based on the first information sent by the network device, so that accuracy of determining the associated data can be improved.

In some feasible examples, the buffer status information further includes at least one of the following: a data volume of remaining to-be-transmitted data, a data volume of remaining to-be-transmitted data other than the to-be-transmitted data that arrives latest, an identifier or an indication indicating that to-be-transmitted data exists, a remaining PDB or a remaining PSDB of to-be-transmitted data, and jitter information upon arrival of to-be-transmitted data. In this way, the terminal device may report at least one of the foregoing buffer status information, to help assist the network device in properly allocating a resource and adjusting a scheduling policy in a timely manner, and improve communication quality.

In some feasible examples, a data type of the to-be-transmitted data includes at least one of the following: data packet, data frame, and data burst.

According to a fifth aspect, an embodiment of this application discloses a fourth communication method, applied to a network device, and including: The network device sends a second indication to a terminal device. The second indication includes a second configuration of a DRB of the terminal device or a second configuration of a first LCH or a second LCH corresponding to the DRB, the second configuration indicates to report, when to-be-transmitted data on the first LCH or the second LCH meets a BSR trigger condition, buffer status information of the LCH and/or an LCG to which the to-be-transmitted data belongs and buffer status information of associated data associated with the LCH to which the to-be-transmitted data belongs, and the buffer status information includes at least a data volume of to-be-transmitted data that arrives latest. The network device receives, from the terminal device, the buffer status information of the LCH and/or the LCG to which the to-be-transmitted data belongs and the buffer status information of the associated data. In this way, when a BSR is triggered, the terminal device may send, to the network device, the buffer status information of the LCH and/or the LCG to which the to-be-transmitted data that meets the trigger condition belongs and the buffer status information of the associated data, so that the network device can obtain data arrival and buffering of data related to a service that triggers the BSR. This helps assist the network device in adjusting a scheduling policy, and improves communication quality. In addition, sending buffer status information of all LCHs is avoided, so that signaling overheads can be reduced.

In some feasible examples, when the to-be-transmitted data on the first LCH meets the BSR trigger condition, the associated data includes an LCH and/or an LCG associated with the first LCH. Alternatively, when the to-be-transmitted data on the second LCH meets the BSR trigger condition, the associated data includes an LCH and/or an LCG associated with the second LCH. The communication method further includes: The network device sends first information to the terminal device, where the first information indicates the LCH and/or the LCG associated with the first LCH or the second LCH. In this way, the terminal device may determine the associated data based on the LCH or the LCG associated with the DRB, or may determine the associated data based on the first information sent by the network device, so that accuracy of determining the associated data can be improved.

In some feasible examples, the buffer status information further includes at least one of the following: a data volume of remaining to-be-transmitted data, a data volume of remaining to-be-transmitted data other than the to-be-transmitted data that arrives latest, an identifier or an indication indicating that to-be-transmitted data exists, a remaining PDB or a remaining PSDB of to-be-transmitted data, and jitter information upon arrival of to-be-transmitted data. In this way, the terminal device may report at least one of the foregoing buffer status information, to help assist the network device in properly allocating a resource and adjusting a scheduling policy in a timely manner, and improve communication quality.

In some feasible examples, a data type of the to-be-transmitted data includes at least one of the following: data packet, data frame, and data burst.

According to a sixth aspect, an embodiment of this application discloses a first communication apparatus, used in a terminal device, and including: a transceiver unit, configured to receive a first indication from a network device, where the first indication includes a first configuration of a DRB of the terminal device or a first configuration of a first LCH or a second LCH corresponding to the DRB, and the first configuration indicates to trigger a BSR when a first duration expires and to-be-transmitted data on the first LCH or the second LCH meets a first condition; and a processing unit, configured to trigger the BSR.

In some feasible examples, the processing unit is further configured to: perform timing or countdown based on the first duration; and if the to-be-transmitted data meets a second condition within the first duration, the terminal device stops timing or countdown, where the second condition and the first condition are complementary; or when the first duration expires, determine that the to-be-transmitted data meets the first condition.

In some feasible examples, the first duration is less than an upper delay limit, and the upper delay limit includes a PDB or a PSDB.

In some feasible examples, the first condition includes at least one of the following: The to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, and buffer status information of the to-be-transmitted data is not sent.

Correspondingly, in some feasible examples, the second condition may include at least one of the following: The to-be-transmitted data is sent, the data volume of the remaining to-be-transmitted data in the to-be-transmitted data is less than or equal to the first threshold, the proportion of the remaining to-be-transmitted data in the to-be-transmitted data is less than or equal to the second threshold, and the buffer status information of the to-be-transmitted data is sent.

In some feasible examples, the first configuration further indicates to report, when the BSR is triggered, buffer status information of the LCH and/or an LCG to which the to-be-transmitted data belongs and buffer status information of associated data associated with the LCH to which the to-be-transmitted data belongs, and the buffer status information includes at least a data volume of to-be-transmitted data that arrives latest.

In some feasible examples, the buffer status information further includes at least one of the following: the data volume of the remaining to-be-transmitted data, a data volume of remaining to-be-transmitted data other than the to-be-transmitted data that arrives latest, an identifier or an indication indicating that to-be-transmitted data exists, a remaining PDB or a remaining PSDB of to-be-transmitted data, and jitter information upon arrival of to-be-transmitted data.

In some feasible examples, when the to-be-transmitted data on the first LCH meets the first condition, the associated data includes an LCH and/or an LCG associated with the first LCH. Alternatively, when the to-be-transmitted data on the second LCH meets the first condition, the associated data includes an LCH and/or an LCG associated with the second LCH. The transceiver unit is further configured to receive first information from the network device, where the first information indicates the LCH and/or the LCG associated with the first LCH or the second LCH. The processing unit is further configured to determine the associated data based on the first information.

In some feasible examples, the first condition further includes that the buffer status information of the associated data is not sent.

Correspondingly, in some feasible examples, the second condition further includes that the buffer status information of the associated data is sent.

In some feasible examples, a data type of the to-be-transmitted data includes at least one of the following: data packet, data frame, and data burst.

It may be understood that specific content of the sixth aspect corresponds to the content of the first aspect. For corresponding features of the sixth aspect and beneficial effects achieved, refer to the descriptions of the first aspect. To avoid repetition, detailed descriptions are properly omitted herein.

According to a seventh aspect, an embodiment of this application discloses a second communication apparatus, used in a network device, and including: a transceiver unit, configured to send a first indication to a terminal device. The first indication includes a first configuration of a DRB of the terminal device or a first configuration of a first LCH or a second LCH corresponding to the DRB, and the first configuration indicates to trigger a BSR when a first duration expires and to-be-transmitted data on the first LCH or the second LCH meets a first condition. The transceiver unit is further configured to receive buffer status information of a first LCG from the terminal device, where the first LCG includes an LCG corresponding to the first LCH and an LCG corresponding to the second LCH.

In some feasible examples, the first condition includes at least one of the following: The to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, and buffer status information of the to-be-transmitted data is not sent.

In some feasible examples, the first duration is less than an upper delay limit, and the upper delay limit includes a PDB or a PSDB.

In some feasible examples, a data type of the to-be-transmitted data includes at least one of the following: data packet, data frame, and data burst.

It may be understood that specific content of the seventh aspect corresponds to the content of the second aspect. For corresponding features of the seventh aspect and beneficial effects achieved, refer to the descriptions of the second aspect. To avoid repetition, detailed descriptions are properly omitted herein.

According to an eighth aspect, an embodiment of this application discloses a third communication apparatus, used in a network device, and including: a transceiver unit, configured to send a first indication to a terminal device. The first indication includes a first configuration of a DRB of the terminal device or a first configuration of a first LCH or a second LCH corresponding to the DRB, the first configuration indicates to trigger a BSR when a first duration expires and to-be-transmitted data on the first LCH or the second LCH meets a first condition, the first configuration further indicates to report, when the BSR is triggered, buffer status information of the LCH and/or an LCG to which the to-be-transmitted data belongs and buffer status information of associated data associated with the LCH to which the to-be-transmitted data belongs, and the buffer status information includes at least a data volume of to-be-transmitted data that arrives latest. The transceiver unit is further configured to receive, from the terminal device, the buffer status information of the LCH and/or the LCG to which the to-be-transmitted data belongs and the buffer status information of the associated data.

In some feasible examples, the first condition includes at least one of the following: The to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, the buffer status information of the to-be-transmitted data is not sent, and the buffer status information of the associated data is not sent.

Correspondingly, in some feasible examples, the second condition may include at least one of the following: The to-be-transmitted data is sent, the data volume of the remaining to-be-transmitted data in the to-be-transmitted data is less than or equal to the first threshold, the proportion of the remaining to-be-transmitted data in the to-be-transmitted data is less than or equal to the second threshold, the buffer status information of the to-be-transmitted data is sent, and the buffer status information of the associated data is sent.

In some feasible examples, the buffer status information further includes at least one of the following: the data volume of the remaining to-be-transmitted data, a data volume of remaining to-be-transmitted data other than the to-be-transmitted data that arrives latest, an identifier or an indication indicating that to-be-transmitted data exists, a remaining PDB or a remaining PSDB of to-be-transmitted data, and jitter information upon arrival of to-be-transmitted data.

In some feasible examples, when the to-be-transmitted data on the first LCH meets the first condition, the associated data includes an LCH and/or an LCG associated with the first LCH. Alternatively, when the to-be-transmitted data on the second LCH meets the first condition, the associated data includes an LCH and/or an LCG associated with the second LCH. The transceiver unit is further configured to receive first information from the terminal device, where the first information indicates the LCH and/or the LCG associated with the first LCH or the second LCH.

In some feasible examples, the first duration is less than an upper delay limit, and the upper delay limit includes a PDB or a PSDB.

In some feasible examples, a data type of the to-be-transmitted data includes at least one of the following: data packet, data frame, and data burst.

It may be understood that specific content of the eighth aspect corresponds to the content of the third aspect. For corresponding features of the eighth aspect and beneficial effects achieved, refer to the descriptions of the third aspect. To avoid repetition, detailed descriptions are properly omitted herein.

According to a ninth aspect, an embodiment of this application discloses a fourth communication apparatus, used in a terminal device, and including: a transceiver unit, configured to receive a second indication from a network device, where the second indication includes a second configuration of a DRB of the terminal device or a second configuration of a first LCH or a second LCH corresponding to the DRB, the second configuration indicates to report, when to-be-transmitted data on the first LCH or the second LCH meets a BSR trigger condition, buffer status information of the LCH and/or an LCG to which the to-be-transmitted data belongs and buffer status information of associated data associated with the LCH to which the to-be-transmitted data belongs, and the buffer status information includes at least a data volume of to-be-transmitted data that arrives latest; and a processing unit, configured to trigger a BSR, to send, to the network device, the buffer status information of the LCH and/or the LCG to which the to-be-transmitted data belongs and the buffer status information of the associated data.

In some feasible examples, when the to-be-transmitted data on the first LCH meets the BSR trigger condition, the associated data includes an LCH and/or an LCG associated with the first LCH. Alternatively, when the to-be-transmitted data on the second LCH meets the BSR trigger condition, the associated data includes an LCH and/or an LCG associated with the second LCH. The transceiver unit is further configured to receive first information from the network device, where the first information indicates the LCH and/or the LCG associated with the first LCH or the second LCH. The processing unit is further configured to determine the associated data based on the first information.

In some feasible examples, the buffer status information further includes at least one of the following: a data volume of remaining to-be-transmitted data, a data volume of remaining to-be-transmitted data other than the to-be-transmitted data that arrives latest, an identifier or an indication indicating that to-be-transmitted data exists, a remaining PDB or a remaining PSDB of to-be-transmitted data, and jitter information upon arrival of to-be-transmitted data.

In some feasible examples, a data type of the to-be-transmitted data includes at least one of the following: data packet, data frame, and data burst.

It may be understood that specific content of the ninth aspect corresponds to the content of the fourth aspect. For corresponding features of the ninth aspect and beneficial effects achieved, refer to the descriptions of the fourth aspect. To avoid repetition, detailed descriptions are properly omitted herein.

According to a tenth aspect, an embodiment of this application discloses a fifth communication apparatus, used in a network device, and including: a transceiver unit, configured to send a second indication to a terminal device. The second indication includes a second configuration of a DRB of the terminal device or a second configuration of a first LCH or a second LCH corresponding to the DRB, the second configuration indicates to report, when to-be-transmitted data on the first LCH or the second LCH meets a BSR trigger condition, buffer status information of the LCH and/or an LCG to which the to-be-transmitted data belongs and buffer status information of associated data, and the buffer status information includes at least a data volume of to-be-transmitted data that arrives latest. The transceiver unit is further configured to receive, from the terminal device, the buffer status information of the LCH and/or the LCG to which the to-be-transmitted data belongs and the buffer status information of the associated data.

In some feasible examples, when the to-be-transmitted data on the first LCH meets the BSR trigger condition, the associated data includes an LCH and/or an LCG associated with the first LCH. Alternatively, when the to-be-transmitted data on the second LCH meets the BSR trigger condition, the associated data includes an LCH and/or an LCG associated with the second LCH. The transceiver unit is further configured to send first information to the terminal device, where the first information indicates the LCH and/or the LCG associated with the first LCH or the second LCH.

In some feasible examples, the buffer status information further includes at least one of the following: a data volume of remaining to-be-transmitted data, a data volume of remaining to-be-transmitted data other than the to-be-transmitted data that arrives latest, an identifier or an indication indicating that to-be-transmitted data exists, a remaining PDB or a remaining PSDB of to-be-transmitted data, and jitter information upon arrival of to-be-transmitted data.

In some feasible examples, a data type of the to-be-transmitted data includes at least one of the following: data packet, data frame, and data burst.

It may be understood that specific content of the tenth aspect corresponds to the content of the fifth aspect. For corresponding features of the tenth aspect and beneficial effects achieved, refer to the descriptions of the fifth aspect. To avoid repetition, detailed descriptions are properly omitted herein.

According to an eleventh aspect, this application discloses a sixth communication apparatus. The communication apparatus may be a terminal device, a network device, or the like, or may include an apparatus in these devices, for example, a chip, a chip system, or a circuit, or an apparatus that can implement a related function. The communication apparatus includes a processor. The processor is configured to execute instructions stored in a memory. When the instructions are executed, any communication method in the first aspect and any feasible example of the first aspect, the second aspect and any feasible example of the second aspect, the third aspect and any feasible example of the third aspect, the fourth aspect and any feasible example of the fourth aspect, and the fifth aspect and any feasible example of the fifth aspect is implemented.

In some feasible examples, the communication apparatus further includes one or more of the memory and a transceiver. The transceiver is configured to send and receive data and/or signaling.

According to a twelfth aspect, this application discloses a communication system. The communication system includes at least one terminal device and at least one network device. When the at least one terminal device and the at least one network device run in the communication system, any communication method in the first aspect and any feasible example of the first aspect, the second aspect and any feasible example of the second aspect, the third aspect and any feasible example of the third aspect, the fourth aspect and any feasible example of the fourth aspect, and the fifth aspect and any feasible example of the fifth aspect is performed.

According to a thirteenth aspect, an embodiment of this application discloses a computer-readable storage medium. The computer-readable storage medium stores a computer program. When the computer program is run on one or more processors, any communication method in the first aspect and any feasible example of the first aspect, the second aspect and any feasible example of the second aspect, the third aspect and any feasible example of the third aspect, the fourth aspect and any feasible example of the fourth aspect, and the fifth aspect and any feasible example of the fifth aspect is implemented.

According to a fourteenth aspect, an embodiment of this application discloses a computer program product. The computer program product is configured to store a computer program. When the computer program is run on a computer, the computer is enabled to perform any communication method in the first aspect and any feasible example of the first aspect, the second aspect and any feasible example of the second aspect, the third aspect and any feasible example of the third aspect, the fourth aspect and any feasible example of the fourth aspect, and the fifth aspect and any feasible example of the fifth aspect.

According to a fifteenth aspect, an embodiment of this application discloses a first chip, including a processor and a memory. The processor is configured to invoke, from the memory, instructions stored in the memory and run the instructions, so that a device on which the chip is mounted performs any communication method in the first aspect and any feasible example of the first aspect, the second aspect and any feasible example of the second aspect, the third aspect and any feasible example of the third aspect, the fourth aspect and any feasible example of the fourth aspect, and the fifth aspect and any feasible example of the fifth aspect.

According to a sixteenth aspect, an embodiment of this application discloses a second chip, including an input interface, an output interface, and a processing circuit. The input interface, the output interface, and the processing circuit are connected through an internal connection path, and the processing circuit is configured to perform any communication method in the first aspect and any feasible example of the first aspect, the second aspect and any feasible example of the second aspect, the third aspect and any feasible example of the third aspect, the fourth aspect and any feasible example of the fourth aspect, and the fifth aspect and any feasible example of the fifth aspect.

According to a seventeenth aspect, an embodiment of this application discloses a third chip, including: an input interface, an output interface, and a processor, and optionally, further including a memory. The input interface, the output interface, the processor, and the memory are connected through an internal connection path, and the processor is configured to execute code in the memory. When the code is executed, the processor is configured to perform any communication method in the first aspect and any feasible example of the first aspect, the second aspect and any feasible example of the second aspect, the third aspect and any feasible example of the third aspect, the fourth aspect and any feasible example of the fourth aspect, and the fifth aspect and any feasible example of the fifth aspect.

According to an eighteenth aspect, an embodiment of this application discloses a chip system, including at least one processor, a memory, and an interface circuit. The memory, a transceiver, and the at least one processor are interconnected through a line, the at least one memory stores a computer program, and the computer program is used by the processor to perform any communication method in the first aspect and any feasible example of the first aspect, the second aspect and any feasible example of the second aspect, the third aspect and any feasible example of the third aspect, the fourth aspect and any feasible example of the fourth aspect, and the fifth aspect and any feasible example of the fifth aspect.

It should be understood that mutual reference may be made to the implementations and beneficial effects of the foregoing aspects of this application.

### BRIEF DESCRIPTION OF DRAWINGS

The following describes accompanying drawings used in embodiments of this application.
FIG. 1 is a diagram of a data transmission manner of an AR service according to an embodiment of this application;
FIG. 2 is a diagram of an architecture of a communication system according to an embodiment of this application;
FIG. 3 is a diagram of a format of a short BSR MAC CE or a short truncated BSR MAC CE according to an embodiment of this application;
FIG. 4 is a diagram of a format of a long BSR MAC CE or a long truncated BSR MAC CE according to an embodiment of this application;
FIG. 5 is a schematic flowchart of a first communication method according to an embodiment of this application;
FIG. 6 is a diagram of a timing manner according to an embodiment of this application;
FIG. 7 is a schematic flowchart of a second communication method according to an embodiment of this application;
FIG. 8(a), FIG. 8(b), FIG. 8(c), FIG. 8(d), and FIG. 8(e) are diagrams of formats of buffer status information of an LCG to which to-be-transmitted data belongs and buffer status information of associated data according to an embodiment of this application;
FIG. 9 is a schematic flowchart of a third communication method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of a terminal device according to an embodiment of this application.

### DESCRIPTION OF EMBODIMENTS

The technical solutions in embodiments of this application may be applied to various communication systems, for example, current communication systems such as a global system for mobile communications (global system for mobile communications, GSM) corresponding to a second generation (second generation, 2G) mobile communication technology, a general packet radio service (general packet radio service, GPRS) between the second generation mobile communication technology and a third generation mobile communication technology, a code division multiple access (code division multiple access, CDMA) system, a wideband code division multiple access (wideband code division multiple access, WCDMA) system, and a universal mobile telecommunications system (universal mobile telecommunications system, UMTS) corresponding to the third generation (third generation, 3G) mobile communication technology, a long term evolution (long term evolution, LTE) system corresponding to a fourth generation (fourth generation, 4G) mobile communication technology, and a new radio (new radio, NR) system corresponding to a fifth generation (fifth generation, 5G) mobile communication technology, and a future communication system such as a sixth generation (sixth generation, 6G) system.

Generally, a conventional communication system supports a limited quantity of connections and is easy to implement. However, with development of communication technologies, a mobile communication system not only supports conventional communication, but also supports, for example, device to device (device to device, D2D) communication, machine to machine (machine to machine, M2M) communication, machine type communication (machine type communication, MTC), and vehicle to everything (vehicle to everything, V2X) communication, for example, vehicle to vehicle (vehicle to vehicle, V2V) communication, vehicle to infrastructure (vehicle to infrastructure, V2I) communication, vehicle to pedestrian (vehicle to pedestrian, V2P) communication, and vehicle to network (vehicle to network, V2N) communication.

To make the objectives, technical solutions, and advantages of this application clearer, the following describes embodiments of this application with reference to the accompanying drawings in embodiments of this application. FIG. 2 is a diagram of a structure of a communication system according to an embodiment of this application. As shown in FIG. 2, the communication system may include a terminal device 100 and a network device 200. The terminal device 100 may be connected to the network device 200 in a wired or wireless manner, or may access a core network via the network device 200.

In this embodiment of this application, the network device 200 may be a device configured to support the terminal device 100 in accessing the communication system. The network device 200 may include an access network device, and main functions of the access network device include: managing a radio resource, compressing an internet protocol (internet protocol, IP) header and encrypting a user data stream, selecting a mobility management entity (mobility management entity, MME) when user equipment is attached, routing user plane data to a service gateway (service gateway, SGW), organizing and sending a paging message, organizing and sending a broadcast message, and measurement and measurement report configuration that are for a mobility or scheduling purpose.

The access network device may include but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a radio relay node, a radio backhaul node, a transmission point (transmission and reception point, TRP, or transmission point, TP) or the like; or may be a gNB or a transmission point (TRP or TP) in a 5G such as NR system, or one or a group (including a plurality of antenna panels) of antenna panels of a base station in the 5G system. Alternatively, the access network device may be referred to as a donor node, an IAB donor (IAB donor), a donor IAB, a donor gNB (donor gNB, DgNB), or the like. Alternatively, the access network device may be a network node, for example, a baseband unit (BBU) or a distributed unit (DU, distributed unit), that constitutes a gNB or a transmission point.

In some deployments, the gNB may include a central unit (central unit, CU) and a DU. The gNB may further include a radio unit (radio unit, RU). The CU implements a part of functions of the gNB, and the DU implements a part of functions of the gNB. For example, the CU implements functions at a radio resource control (radio resource control, RRC) layer and a packet data convergence protocol (packet data convergence protocol, PDCP) layer. The DU implements functions at a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in this architecture, it may also be considered that higher layer signaling, such as RRC layer signaling or PDCP layer signaling, may be sent by the DU or sent by the DU and the CU. It may be understood that the access network device may be a CU node, a DU node, or a device including the CU node and the DU node. In addition, the CU may be classified into an access network device in an access network RAN, or the CU may be classified into an access network device in the core network CN. This is not limited herein.

The TRP is also referred to as a transmission point, and each TRP has one or more antenna panels (panels). A plurality of TRPs may simultaneously perform data transmission with one terminal device 100. The terminal device 100 has at least one antenna panel, and a direction of a transmit beam and/or a direction of a receive beam of the antenna panel can be changed by adjusting a parameter of the antenna panel. When the terminal device 100 has at least two antenna panels, the terminal may simultaneously send or receive beams by using different antenna panels. In FIG. 2 and the following descriptions, an example in which a base station is the network device 200 is used for description.

In this embodiment of this application, the terminal device 100 may include various communication devices having a wireless communication function. The terminal device may be user equipment, an access terminal, a subscriber unit, a subscriber station, a mobile station, a remote station, a remote terminal, a mobile device, a user terminal, a terminal, a wireless communication device, a user agent, or a user apparatus. The terminal device 100 may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in this embodiment of this application.

For example, the terminal device 100 may include an uncrewed aerial vehicle. The uncrewed aerial vehicle may also be referred to as an unmanned aerial vehicle (unmanned aerial vehicle, UAV). Due to its flexibility and convenience, the uncrewed aerial vehicle has become more and more popular, and may be used in UAV plant protection, UAV aerial shooting, UAV forest fire alarm monitoring, and the like.

The terminal device may alternatively be a wearable device. The wearable device may also be referred to as a wearable intelligent device, and is a generic term for wearable devices such as glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to one type of application function and need to collaboratively work with other devices such as smartphones, for example, various smart bands or smart jewelry for monitoring physical signs. This is not limited herein.

In FIG. 2, an XR device is worn on the head of a user 10. In FIG. 2, an example in which the terminal device may be an extended reality (extended reality, XR) device is used for description. The XR device means various real-world and virtual environments generated by using a computing technology and a wearable device, and human-machine interaction. The XR device has advantages such as multi-view and strong interaction, and can provide a brand new visual experience for the user. XR may include technologies such as virtual reality (virtual reality, VR), augmented reality (augmented reality, AR), and mixed reality (mixed reality, MR), and can be widely applied to many fields such as entertainment, gaming, medical care, advertising, industry, online education, and engineering.

Generally, an XR service periodically generates data frames at a specific frame rate. For example, a frame rate of data frames in an uplink AR service may be 60 fps, in other words, 60 frames of video images are generated per second, and one video frame appears approximately every 16.66 ms. A transmission rate is 20 Mbps, 45 Mbps, or the like. The frame rate may alternatively be 120 fps, in other words, 120 frames of video images are generated per second, and one video frame appears approximately every 8.33 ms.

There is a specific delay in encoding of the data frame, and consequently, jitter (jitter) occurs in time at which the data frame arrives on an air interface side. Generally, it may be considered that the jitter complies with a truncated Gaussian distribution, and a truncated range is approximately [-4, 4] ms. In addition, a size of the data frame is not fixed, and usually complies with the truncated Gaussian distribution. A mean of the data frames may be represented as mean=R×1e6/F/8. F is the frame rate, and R is a rate of a data stream. For example, F=60 fps, R=20 Mbps. In this case, mean=41.67 Kbytes. Generally, the size of a data frame ranges from 0.5*mean to 1.5*mean.

In addition, in embodiments of this application, the terminal device may alternatively be a terminal device in an internet of things (internet of things, IoT) system. IoT is an important part of future development of information technologies. A main technical feature of the IoT is connecting a thing to a network by using a communication technology, to implement an intelligent network for interconnection between a person and a machine or between things.

For ease of understanding, in the following example, the solutions provided in this application are described in detail by using an XR device as a terminal device and a base station as a network device. It should be understood that FIG. 2 is merely a diagram. The communication system may further include other network devices not shown in FIG. 2, for example, a wireless relay device and a wireless backhaul device. In addition, quantities of core network devices, access network devices, and terminal devices included in the communication system are not limited in embodiments of this application. As shown in FIG. 2, the terminal device 100 may communicate with a plurality of network devices.

In embodiments of this application, information (information), a signal (signal), a message (message), and a channel (channel) may be interchangeably used sometimes. It should be noted that meanings expressed by the terms are consistent when differences of the terms are not emphasized. "Of (of)", "corresponding (corresponding, relevant)", and "corresponding (corresponding)" may be interchangeably used sometimes. It should be noted that meanings expressed by the terms are consistent when differences of the terms are not emphasized.

The following first provides definitions of technical terms that may occur in embodiments of this application. The terms used in embodiments of this application are only used to explain specific embodiments of this application, but are not intended to limit this application.
(1) Data radio bearer (data radio bearer, DRB), logical channel (logical channel, LCH), and logical channel group (logical channel group, LCG). The DRB is used to carry data plane data. The DRB and the LCH are in a one-to-one or one-to-many relationship. Each LCH may be allocated to one LCG, and data plane data of a terminal device is sent to a network side by using the LCG. One LCG may include a plurality of LCHs, for example, eight LCHs.
(2) Packet delay budget (packet delay budget, PDB) and protocol data unit set delay budget (protocol data unit set delay budget, PSDB). Both the PDB and the PSDU may be an upper delay limit of data packet transmission between a terminal device and a network device. A PDB of an XR service is greater than a periodicity of a data frame. For example, a PDB of an uplink AR service is 30 ms, and a periodicity of a data frame is 16.67 ms. Generally, a PSDU may also be 30 ms.
(3) Buffer status report (buffer status report, BSR). The buffer status report is a manner in which a terminal device sends a medium access control control element (medium access control control element, MAC CE), so that a network side can learn of information about a volume of to-be-transmitted data in an uplink (uplink, UL) buffer of the terminal device, for example, a data volume, and the network side can allocate an uplink resource in a targeted manner.

In LTE and NR, the BSR may include several types of BSRs such as a regular (regular) BSR, a padding (padding) BSR, and a periodic (periodic) BSR. In addition, each type of BSR is a BSR triggered when a specific event occurs. For example, when uplink data arrives on an LCH in an LCG, and none of other LCHs included in an LCG have to-be-transmitted data, or a priority of the LCH is higher than priorities of all other LCHs that are included in an LCG and that have to-be-transmitted data, the regular BSR is triggered. When a retransmission BSR timer (retxBSR-Timer) expires, and uplink to-be-transmitted data exists on at least one LCH included in an LCG, the regular BSR is triggered. When the terminal device has an available uplink resource, and a quantity of remaining padding bits is greater than or equal to a sum of a size of a BSR MAC CE and a size of a MAC CE subheader, the padding BSR is triggered. When a periodic BSR timer (periodic BSR-Timer) expires, the periodic BSR is triggered.

That the terminal device triggers the BSR may include the following several cases: If there is an available uplink resource for new transmission, and the uplink resource can accommodate the sum of the size of the BSR MAC CE and the size of the MAC CE subheader (subheader), the terminal device may generate a BSR MAC CE, to send the BSR. If no generated BSR is a long truncated BSR or a short truncated BSR, the terminal device may start/restart the periodic BSR timer. If the regular BSR is triggered and a logical channel scheduling request delay timer (logical channel SR-DelayTimer) is not run, the terminal device may start/restart the retransmission BSR timer. If there is no available uplink resource for new transmission, or configured uplink grants (configured uplink grants) are configured for the terminal device and the regular BSR is triggered by an LCH whose logical channel scheduling request mask (logical channel SR-Mask) parameter is set to be false, or when the uplink resource that can be used for new transmission cannot meet an LCP mapping limit corresponding to an LCH that triggers the BSR, the terminal device sends a scheduling request (scheduling request, SR) to the network side.

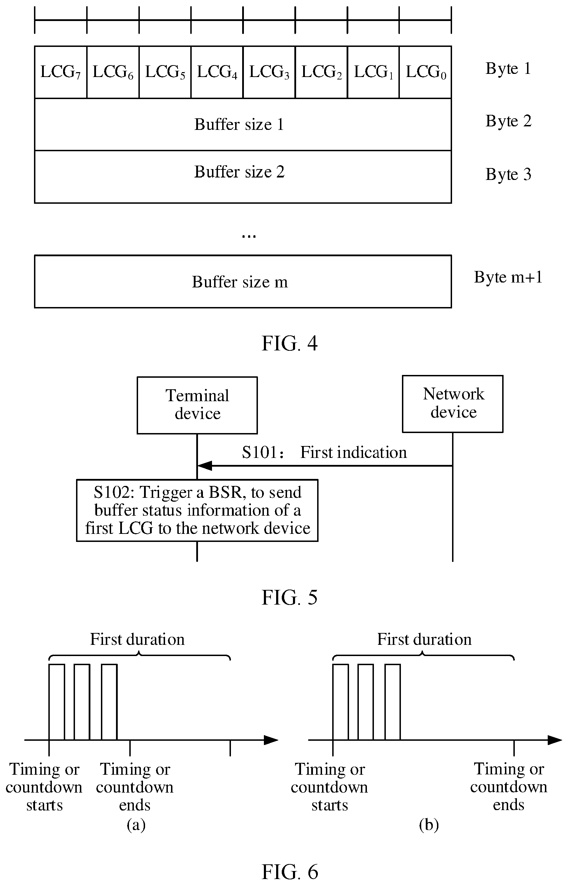

For formats of the BSR MAC CE generated by the terminal device, respectively refer to FIG. 3 and FIG. 4. FIG. 3 is a diagram of a format of a short (Short) BSR MAC CE or a short truncated (Truncated) BSR MAC CE according to an embodiment of this application. FIG. 4 is a diagram of a format of a long (Long) BSR MAC CE or a long truncated BSR MAC CE according to an embodiment of this application. As shown in FIG. 3, the short BSR MAC CE or the short truncated BSR MAC CE may include a 3-bit logical channel group identity (LCG identity, LCG ID) field and a 5-bit buffer size (buffer size) field. The LCG ID indicates an LCG corresponding to a to-be-reported buffer size. As shown in FIG. 4, the long BSR MAC CE or the long truncated BSR MAC CE includes an 8-bit byte map (bitmap) and zero or more buffer size fields. For the long BSR MAC CE, an i^{th} bit LCGᵢ in the bitmap indicates whether the LCGᵢ has a corresponding buffer size field. For the long truncated BSR MAC CE, an i^{th} bit LCGᵢ in the bitmap indicates whether the LCGᵢ has to-be-transmitted data. In this case, a buffer size field corresponding to the LCGᵢ does not necessarily exist subsequently.

Whether the short BSR, the short truncated BSR, the long BSR, or the long truncated BSR is used is not limited in this application. If there are a plurality of pieces of LCG data to be transmitted in the regular BSR or the periodic BSR, the long BSR is used. If there is only one piece of LCG data to be transmitted in the regular BSR or the periodic BSR, the short BSR is used. In case of the padding BSR, a used BSR format depends on a padding quantity. For example, if the padding quantity is greater than or equal to a sum of a length of the long BSR and a length of the subheader, a long BSR format is used, to report buffer status information of an LCG with to-be-transmitted data. If the padding data is greater than or equal to a sum of a length of the short BSR and a length of the subheader and less than a sum of a length of the long BSR and the length of the subheader, and only one piece of LCG data is to be transmitted, the short BSR is used. If the padding data is equal to a sum of a length of the short BSR and a length of the subheader and is less than a sum of a length of the long BSR and the length of the subheader, and there are a plurality of pieces of LCG data to be transmitted, the short truncated BSR is used, to report buffer status information of an LCG corresponding to an LCH with the highest priority. If the padding data is greater than a sum of a length of the short BSR and a length of the subheader and less than a sum of a length of the long BSR and the length of the subheader, and there are a plurality of pieces of LCG data to be transmitted, the long truncated BSR is used, to report buffer status information of related LCGs in descending order of priorities of LCHs with to-be-transmitted data, or report buffer status information of related LCGs in ascending order of identities of the LCGs when priorities of LCHs are the same.

It should be noted that, in this application, the formats of the BSR MAC CE are described in FIG. 3 and FIG. 4. Actually, a specific format of the BSR MAC CE selected by the terminal device for reporting depends on a type of a triggered BSR, a quantity of LCGs with to-be-transmitted data, a size of an available remaining resource, and the like. For details, refer to section 5.4.5 in 3GPP TS 38.321 or a standard defined subsequently.

As described above, the terminal device triggers the BSR only when a specific event occurs, to notify the network side that there is uplink to-be-transmitted data. When a new data frame arrives, a DRB for carrying the data frame may have a data packet of a previous frame whose transmission is not completed. For example, as shown in FIG. 1, a periodicity of a data frame in an AR service is less than a PDB, a new data frame arrives, and a BSR cannot be triggered, to notify a network side of information such as a data frame size. Because the network side knows only information about the previous data frame, the new data frame may not be scheduled.

Based on this, this application provides a communication method and apparatus, and a computer-readable storage medium, to trigger a BSR in a timely manner, avoiding a data loss, helping assist a network device in adjusting a scheduling policy, and improving communication quality.

FIG. 5 is a schematic flowchart of a first communication method according to an embodiment of this application. The method includes but is not limited to the following step S101 and step S102.

S101: A terminal device receives a first indication from a network device.

Correspondingly, the network device sends the first indication to the terminal device.

The first indication includes a first configuration of a DRB of the terminal device or a first configuration of a first LCH or a second LCH corresponding to the DRB, and the first configuration indicates to trigger a BSR when a first duration expires and to-be-transmitted data on the first LCH or the second LCH meets a first condition.

The first indication in this application may be RRC signaling. In this application, one DRB is used as an example for description. Actually, the first indication may include a first configuration of each of a plurality of DRBs. In this embodiment of this application, an LCH corresponding to the DRB is referred to as the first LCH, and a quantity of first LCHs may be 1 or greater than 1. The second LCH may include the first LCH or may not include the first LCH.

The network device may separately configure the DRB, the first LCH, or the second LCH, to obtain a respective first configuration. Alternatively, the first LCH may be configured when the DRB is configured. Alternatively, all DRBs and LCHs may be configured, and an indication parameter, for example, timeoutBSRTriggered, is used in the first indication to indicate whether the first configuration is performed on a corresponding DRB or LCH. For example, that timeoutBSRTriggered of an LCH₂ is 1 indicates that a method corresponding to the first configuration is performed on the LCH₂; and that timeoutBSRTriggered of an LCH₃ is 0 indicates that the method corresponding to the first configuration is not performed on the LCH₃, and a communication method specified in a conventional technology or another standard may be performed.

In this embodiment of this application, the first indication may include the first duration, for example, timeoutTriggerTimer. A value of the first duration is not limited in this application. In some feasible examples, the first duration may be less than an upper delay limit, and the upper delay limit may be a PDB or a PSDB. Optionally, the first duration may be obtained by multiplying the PDB/PSDB by a positive number less than 1. For example, if the PDB is 30 ms, and the positive number less than 1 may be 0.6, the first duration may be 30*0.6=18 (ms). It may be understood that whether to trigger the BSR is determined by using the first duration less than the upper delay limit, to trigger the BSR in a timely manner, avoiding a data loss, helping assist the network device in adjusting a scheduling policy, and improving communication quality.

In some feasible examples, when the first duration expires, the terminal device sends a first request to the network device. The first request may be an SR or another request, and indicates that to-be-transmitted data that is to expire exists in the terminal device.

The first indication may further include the first condition and the like. This is not limited herein. The first configuration may indicate to trigger the BSR when the first duration expires and the to-be-transmitted data on the first LCH or the second LCH meets the first condition. The to-be-transmitted data is not limited in this application. A data type of the to-be-transmitted data may be data packet (packet), data frame (frame), or data burst (burst), and a data size of the to-be-transmitted data may be one or more. For example, when a data packet arrives, timing or countdown may be performed based on the first duration by using a timer. Alternatively, when a data burst arrives, timing, countdown, or the like may be performed based on the first duration by using another timer.

The first condition is used to determine whether to trigger the BSR when the first duration expires, and may include but is not limited to at least one of the following: The to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, and buffer status information of the to-be-transmitted data is not sent.

It may be understood that, that the to-be-transmitted data is not sent indicates that the to-be-transmitted data needs to be sent, and the BSR may be triggered. The first threshold and the second threshold are not limited in this application. For example, the first threshold may be 5, and the second threshold may be 0.6. The remaining to-be-transmitted data in the to-be-transmitted data is to-be-transmitted data that is not sent, and the proportion of the remaining to-be-transmitted data in the to-be-transmitted data is equal to a ratio of the remaining to-be-transmitted data to the to-be-transmitted data, for example, a ratio of a quantity of remaining to-be-transmitted data packets to a total quantity of to-be-transmitted data packets or a ratio of the volume of the remaining to-be-transmitted data to a total volume of the to-be-transmitted data. That the data volume of the remaining to-be-transmitted data in the to-be-transmitted data is greater than the first threshold or the proportion of the remaining to-be-transmitted data in the to-be-transmitted data is greater than the second threshold indicates that a large volume of to-be-transmitted data that is not transmitted needs to be sent, and the BSR may be triggered.

The buffer status information of the to-be-transmitted data is information sent after the BSR is triggered, may include a data volume of to-be-transmitted data that arrives latest, and may further include a data volume of remaining to-be-transmitted data, a remaining PDB or a remaining PSDB, jitter information upon arrival of to-be-transmitted data, and the like. It may be understood that, if the buffer status information of the to-be-transmitted data is not sent, it indicates that the BSR is not triggered, and the BSR may be triggered.

It should be noted that the BSR that is not triggered as the buffer status information of the to-be-transmitted data is not sent may be the foregoing regular BSR, padding BSR, or periodic BSR, and a trigger condition of the BSR may be different from the first condition of the BSR provided in this application.

In some possible examples, whether to trigger the BSR may be determined in the following two manners.

Manner 1: The terminal device performs timing or countdown based on the first duration, and determines, within the first duration, whether the to-be-transmitted data meets a second condition. If the to-be-transmitted data meets the second condition, the terminal device stops timing or countdown. If the to-be-transmitted data does not meet the second condition, when the first duration expires, the terminal device determines that the to-be-transmitted data meets the first condition.

The second condition and the first condition are complementary, and the second condition may be understood as an opposite condition of the first condition. For example, the second condition may include a condition complementary to that the to-be-transmitted data is not sent: The to-be-transmitted data is sent, which may include two cases: at least one piece of to-be-transmitted data is sent and all to-be-transmitted data is sent. It may be understood that, that the to-be-transmitted data is sent indicates that the terminal device is sending the to-be-transmitted data or has sent all or a part of the to-be-transmitted data, and the BSR may not be triggered.

The second condition may alternatively include a condition complementary to that the data volume of the remaining to-be-transmitted data in the to-be-transmitted data is greater than the first threshold: The data volume of the remaining to-be-transmitted data in the to-be-transmitted data is less than or equal to the first threshold. In other words, a data volume of transmitted data in the to-be-transmitted data is greater than the first threshold. The second condition may alternatively include a condition complementary to that the proportion of the remaining to-be-transmitted data in the to-be-transmitted data is greater than the second threshold: The proportion of the remaining to-be-transmitted data in the to-be-transmitted data is less than or equal to the second threshold. In other words, a proportion of transmitted data in the to-be-transmitted data is greater than the second threshold. The transmitted data in the to-be-transmitted data is to-be-transmitted data that is sent, and the proportion of the transmitted data in the to-be-transmitted data is equal to a ratio of the transmitted data to the to-be-transmitted data, for example, a ratio of a quantity of transmitted data packets to the total quantity of to-be-transmitted data packets or a ratio of a volume of the transmitted data to the total volume of the to-be-transmitted data. It may be understood that, that the data volume of the remaining to-be-transmitted data in the to-be-transmitted data is less than or equal to the first threshold or the proportion of the remaining to-be-transmitted data in the to-be-transmitted data is less than or equal to the second threshold indicates that a large volume of to-be-transmitted data is sent, and the BSR may not be triggered.

The second condition may alternatively include that the buffer status information of the to-be-transmitted data is sent. It may be understood that, that the buffer status information of the to-be-transmitted data is sent indicates that the BSR has been triggered, and the BSR may no longer be triggered.

In Manner 1, if there is newly arrived to-be-transmitted data on the first LCH of the terminal device, the terminal device may start timing or countdown based on the first duration, and determine, within the first duration, whether the to-be-transmitted data meets the second condition. If the to-be-transmitted data meets the second condition, the terminal device stops timing or countdown, and performs timing or countdown again when a next piece of to-be-transmitted data arrives. If the to-be-transmitted data does not meet the second condition within the first duration, when the first duration expires, the terminal device determines that the to-be-transmitted data meets the first condition.

Manner 2: The terminal device performs timing or countdown based on the first duration, and when the first duration expires, determines whether the to-be-transmitted data meets the first condition. If the to-be-transmitted data meets the first condition, the terminal device determines that the to-be-transmitted data meets the first condition.

For the first condition and the first duration, refer to the foregoing descriptions. Details are not described herein again. It may be understood that, in Manner 2, the terminal device does not actively stop timing or countdown during running of a timer, but determines, when the first duration expires, whether the to-be-transmitted data meets the first condition. If the to-be-transmitted data meets the first condition, step S102 is performed. Otherwise, timing or countdown may be performed again when the next piece of to-be-transmitted data arrives.

For example, FIG. 6 is a diagram of a timing manner according to an embodiment of this application. As shown in (a) in FIG. 6, the terminal device (the timer in the terminal device) may stop timing or countdown if the second condition is met within the first duration. As shown in (b) in FIG. 6, the terminal device (the timer in the terminal device) may end timing or countdown when the first duration expires.

S102: The terminal device triggers the BSR, to send buffer status information of a first LCG to the network device.

Correspondingly, the network device receives the buffer status information of the first LCG from the terminal device.

The first LCG may include an LCG corresponding to the first LCH and an LCG corresponding to the second LCH, and the first LCG may be understood as an LCG that can be used by the terminal device. In other words, if the to-be-transmitted data on the first LCH meets the first condition when the first duration expires, the terminal device may send buffer status information of to-be-transmitted data in the first LCG to the network device. If the to-be-transmitted data on the second LCH meets the first condition when the first duration expires, the terminal device may send buffer status information of to-be-transmitted data in the first LCG to the network device. For the buffer status information, refer to the descriptions of step S101. Details are not described herein again.

It may be understood that the network device may not allocate an uplink resource to the terminal device when the terminal device has no uplink data, to save the resource. If no uplink resource is currently configured, or a configured uplink resource is unavailable or insufficient, the buffer status information of the to-be-transmitted data cannot be directly sent to the network device. A scheduling request, for example, an SR, may be first sent to the network device, to request to allocate the uplink resource.

In the communication method shown in FIG. 5, after the terminal device receives the first indication from the network device, the terminal device determines, based on the first configuration of the DRB or the first configuration of the first LCH or the second LCH corresponding to the DRB in the first indication after the to-be-transmitted data arrives on the first LCH or the second LCH, whether the to-be-transmitted data meets the first condition when the first duration expires. If the to-be-transmitted data meets the first condition, the BSR may be triggered, to send the buffer status information of the first LCG (including the LCG corresponding to the first LCH and the LCG corresponding to the second LCH) to the network device. In this way, the BSR can be triggered in a timely manner, avoiding a data loss, helping assist the network device in adjusting a scheduling policy, and improving communication quality.

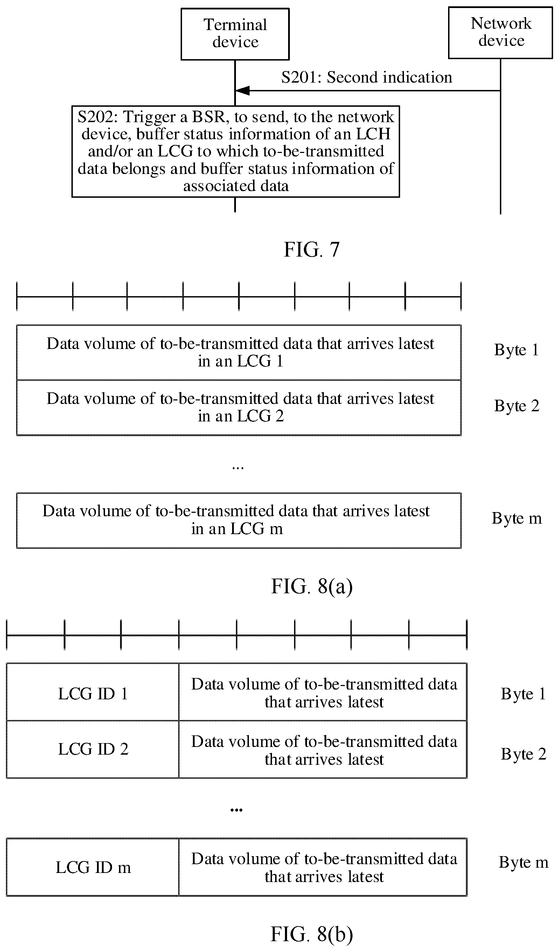

FIG. 7 is a schematic flowchart of a second communication method according to an embodiment of this application. The communication method may include but is not limited to the following step S201 and step S202.

S201: A terminal device receives a second indication from a network device.

Correspondingly, the network device sends the second indication to the terminal device.

The second indication includes a second configuration of a DRB of the terminal device or a second configuration of a first LCH or a second LCH corresponding to the DRB, and the second configuration indicates to report, when to-be-transmitted data on the first LCH or the second LCH meets a BSR trigger condition, buffer status information of the LCH and/or an LCG to which the to-be-transmitted data belongs and buffer status information of associated data associated with the LCH to which the to-be-transmitted data belongs. In other words, when the to-be-transmitted data on the first LCH meets the BSR trigger condition, the first LCH and/or an LCG corresponding to the first LCH and buffer status information of associated data related to the first LCH may be sent to the network device. When the to-be-transmitted data on the second LCH meets the BSR trigger condition, the second LCH and/or an LCG corresponding to the second LCH and buffer status information of associated data related to the second LCH may be sent to the network device.

The second indication in this application may be RRC signaling. An example in which the DRB in the second indication is one DRB is used for description. Actually, the second indication may include a second configuration of each of a plurality of DRBs. The first LCH is used as an LCH corresponding to the DRB, and a quantity of first LCHs may be 1 or greater than 1. The second LCH may include the first LCH or may not include the first LCH.

The network device may separately configure the DRB, the first LCH, or the second LCH, to obtain a respective second configuration. Alternatively, the first LCH may be configured when the DRB is configured. Alternatively, all DRBs and LCHs may be configured, and an indication parameter, for example, associatedBSRTriggered, is used in the second indication to indicate whether the second configuration is performed on a corresponding DRB or LCH. For example, that associatedBSRTriggered of an LCH₂ is 1 indicates that a method corresponding to the second configuration is performed on the LCH₁; and that associatedBSRTriggered of an LCH₃ is 0 indicates that the method corresponding to the second configuration is not performed on the LCH₂, and a communication method specified in a conventional technology or another standard may be performed.

In some feasible examples, when the to-be-transmitted data on the first LCH meets the BSR trigger condition, the associated data includes an LCH and/or an LCG associated with the first LCH. Alternatively, when the to-be-transmitted data on the second LCH meets the BSR trigger condition, the associated data includes an LCH and/or an LCG associated with the second LCH.

The associated data may be understood as data related to a service that triggers the BSR, and the service that triggers the BSR is a service that meets the BSR trigger condition. For example, it is assumed that the trigger condition is a first condition, and an (application) service includes video data and audio data. When the video data is used as the to-be-transmitted data on the first LCH and meets the first condition of the BSR, the associated data may include the audio data. Alternatively, the associated data includes key frame data and non-key frame data in the video data. In this way, the buffer status information of the LCH and/or the LCG to which the to-be-transmitted data that meets the trigger condition belongs and the buffer status information of the associated data may be sent, so that the network device can obtain data arrival and buffering of the data related to the service that triggers the BSR. This helps assist the network device in adjusting a scheduling policy, and improves communication quality. In addition, sending buffer status information of all LCHs is avoided, so that signaling overheads can be reduced.

A method for obtaining the associated data by the terminal device is not limited in this application. When a current service of the terminal device is associated with one DRB, the terminal device may obtain an LCH associated with a first LCH corresponding to the DRB or an LCG (which may include the LCG corresponding to the first LCH) corresponding to the first LCH. When a current service of the terminal device is associated with a plurality of DRBs, the terminal device may obtain an LCH associated with each of the plurality of DRBs or an LCG corresponding to the LCH.

The associated data may be explicitly indicated by the network device. For example, in some feasible examples, the terminal device receives first information from the network device. Correspondingly, the network device sends the first information to the terminal device. The first information may be sent before step S201, or may be sent when step S201 is performed. The first information indicates the LCH and/or the LCG associated with the first LCH or the second LCH. The first information may be RRC signaling, and an association relationship between a DRB, an LCH, and an LCG may be stored in a DRB configuration information element, an LCH configuration information element, or an LCG configuration information element, for example, associatedDRBList, associatedLCHList, or associatedLCGList. In other words, the first information may indicate, to the terminal device, an LCH and/or an LCG associated with a DRB, or may indicate, to the terminal device, an LCH and/or an LCG associated with an LCH. In this way, the associated data is determined based on the first information sent by the network device, so that accuracy of determining the associated data can be improved.

The buffer status information of the LCH and/or the LCG to which the to-be-transmitted data belongs may include a data volume of to-be-transmitted data that arrives latest in the LCH and/or the LCG to which the to-be-transmitted data belongs, and the buffer status information of the associated data may include a data volume of to-be-transmitted data that arrives latest in the associated data, so that after the buffer status information is sent, an uplink resource may be allocated to the to-be-transmitted data. A type of the buffer status information of the LCH and/or the LCG to which the to-be-transmitted data belongs may be consistent with a type of the buffer status information of the associated data. The following uses the buffer status information of the associated data as an example for description. The buffer status information of the associated data may further include at least one of the following: a data volume of remaining to-be-transmitted data in the associated data, a data volume of remaining to-be-transmitted data other than the to-be-transmitted data that arrives latest in the associated data, an identifier or an indication indicating that to-be-transmitted data exists in the associated data, a remaining PDB or a remaining PSDB of at least one piece of to-be-transmitted data in the associated data, and jitter information upon arrival of the at least one piece of to-be-transmitted data in the associated data.

The foregoing data volumes may be values in unit of bytes or Kbytes, or each data volume may be an index value, and the index value may be used to obtain a value of the data volume. The at least one piece of to-be-transmitted data in the associated data may be all to-be-transmitted data, may be to-be-transmitted data that arrives earliest or latest, or may be to-be-transmitted data of a specified type (for example, an uplink service, an AR service, or an I frame in the AR service). The identifier indicating that the to-be-transmitted data exists in the associated data may be an ID of an LCH or an LCG in which the to-be-transmitted data exists in the associated data. The indication indicating that the to-be-transmitted data exists in the associated data may indicate whether each LCH or LCG in which to-be-transmitted data exists in the associated data has to-be-transmitted data, or may indicate whether each LCH or LCG in which to-be-transmitted data exists in the associated data has an indication value corresponding to buffer information reporting, for example, a bitmap.

The remaining PDB or the remaining PSDB may be a value in unit of ms, or may be another index value, and the index value may be used to obtain a time value of the remaining PDB or the remaining PSDB. The jitter information may be a deviation between an actual arrival moment of the to-be-transmitted data and an arrival moment expected by the terminal device, a deviation between the arrival moment of the to-be-transmitted data and an arrival moment of a previous piece of to-be-transmitted data, or the like. The jitter information may be a value in unit of ms/slot/symbol, or may be another index value, and the index value may be used to obtain a time value of the jitter information.

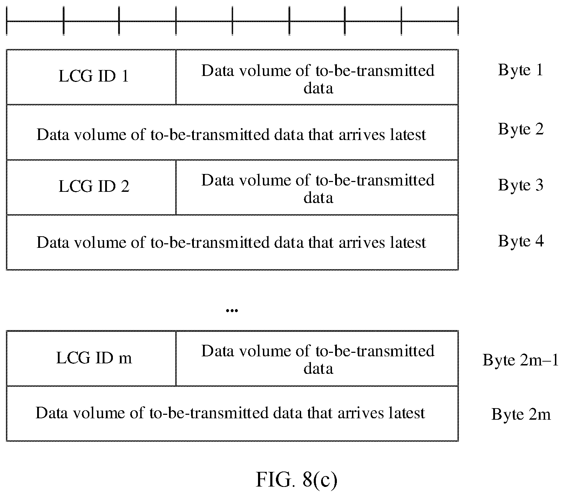

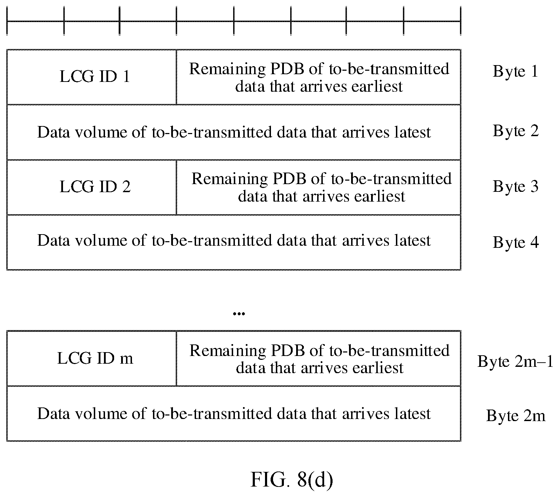

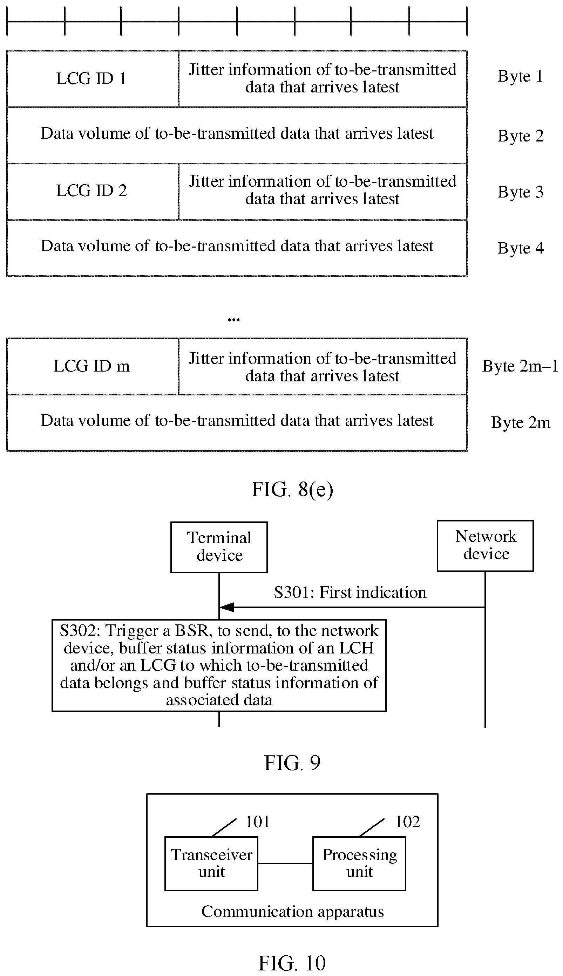

For example, FIG. 8(a), FIG. 8(b), FIG. 8(c), FIG. 8(d), and FIG. 8(e) are diagrams of formats of buffer status information of an LCG to which to-be-transmitted data belongs and buffer status information of associated data according to an embodiment of this application. The LCG to which the to-be-transmitted data belongs may be an LCG 1, and the associated data may be (m-1) LCGs such as an LCG 2 and an LCG m. As shown in FIG. 8(a), the buffer status information of the LCG to which the to-be-transmitted data belongs and the associated data may include a data volume of to-be-transmitted data that arrives latest in the LCG to which the to-be-transmitted data belongs and the associated data. As shown in FIG. 8(b), the buffer status information of the LCG to which the to-be-transmitted data belongs and the associated data may include an identifier (for example, a sequence number following an LCG ID) indicating that there is to-be-transmitted data in the LCG to which the to-be-transmitted data belongs and the associated data and a data volume of to-be-transmitted data that correspondingly arrives latest. As shown in FIG. 8(c), the buffer status information of the LCG to which the to-be-transmitted data belongs and the associated data may include an identifier indicating that there is to-be-transmitted data in the LCG to which the to-be-transmitted data belongs and the associated data, a data volume of to-be-transmitted data that correspondingly arrives latest, and a data volume of remaining to-be-transmitted data other than the to-be-transmitted data that arrives latest. As shown in FIG. 8(d), the buffer status information of the LCG to which the to-be-transmitted data belongs and the associated data may include an identifier indicating that there is to-be-transmitted data in the LCG to which the to-be-transmitted data belongs and the associated data, a data volume of to-be-transmitted data that correspondingly arrives latest, and a remaining PDB or a remaining PSDB of to-be-transmitted data that arrives earliest on each LCG. As shown in FIG. 8(e), the buffer status information of the LCG to which the to-be-transmitted data belongs and the associated data may include an identifier indicating that there is to-be-transmitted data in the LCG to which the to-be-transmitted data belongs and the associated data, a data volume of to-be-transmitted data that correspondingly arrives latest, and jitter information of the to-be-transmitted data that arrives latest.

It may be understood that the terminal device may report at least one of the foregoing buffer status information, to help assist the network device in properly allocating a resource and adjusting a scheduling policy in a timely manner, and improve communication quality.

The BSR trigger condition in the second communication method is not limited in this application. For details, refer to the foregoing descriptions of the trigger conditions of the regular BSR, the padding BSR, and the periodic BSR. Alternatively, the BSR may be triggered when new to-be-transmitted data exists on the LCH or the terminal device receives a new uplink configuration. An uplink configuration may be a data scheduling procedure, and indicates uplink resources that can be used for transmission. The BSR trigger condition in the second communication method may alternatively be the first condition in the first configuration in step S101. For details, refer to the following third communication method.

S202: The terminal device triggers the BSR, to send, to the network device, the buffer status information of the LCH and/or the LCG to which the to-be-transmitted data belongs and the buffer status information of the associated data.

Correspondingly, the network device receives, from the terminal device, the buffer status information of the LCH and/or the LCG to which the to-be-transmitted data belongs and the buffer status information of the associated data. For the buffer status information, refer to the descriptions of step S201. Details are not described herein again. In addition, when the network device does not configure an uplink resource for the terminal device, or a configured uplink resource is unavailable or insufficient, the buffer status information of the to-be-transmitted data may fail to be sent to the network device by using the BSR. A scheduling request, for example, an SR, may be first sent to the network device, to request to allocate the uplink resource.

In the communication method shown in FIG. 7, after the terminal device receives the second indication from the network device, when the BSR is triggered, the terminal device sends, to the network device, the buffer status information of the LCH and/or the LCG to which the to-be-transmitted data belongs and the buffer status information of the associated data, so that the network device can obtain data arrival and buffering of the data related to the service that triggers the BSR. This helps assist the network device in adjusting a scheduling policy, and improves communication quality. In addition, sending buffer status information of all LCHs is avoided, so that signaling overheads can be reduced.

FIG. 9 is a schematic flowchart of a third communication method according to an embodiment of this application. The method includes but is not limited to the following step S301 and step S302.

S301: A terminal device receives a first indication from a network device.

Correspondingly, the network device sends the first indication to the terminal device.

The first indication includes a first configuration of a DRB of the terminal device or a first configuration of a first LCH or a second LCH corresponding to the DRB, and the first configuration indicates to trigger a BSR when a first duration expires and to-be-transmitted data on the first LCH or the second LCH meets a first condition. The first configuration may further indicate to report, when the BSR is triggered, buffer status information of the LCH and/or an LCG to which the to-be-transmitted data belongs and buffer status information of associated data associated with the LCH to which the to-be-transmitted data belongs. For the first indication, refer to the descriptions of step S101. For the associated data and the buffer status information, refer to the descriptions of step S201. Details are not described herein again.

An indication parameter in the first indication in step S301 may be different from that in step S101. For example, the indication parameter is enhancedBSRTriggered, and is used to determine whether to perform the first configuration. For example, that enhancedBSRTriggered of an LCH₂ is 1 indicates that a method corresponding to the first configuration is performed, which is: when the first duration expires, determining whether the to-be-transmitted data on the first LCH or the second LCH meets the first condition, and sending the buffer status information of the associated data to the network device when the BSR is triggered. That enhancedBSRTriggered of an LCH₃ is 0 indicates that the method corresponding to the first configuration is not performed, and a communication method specified in a conventional technology or another standard may be performed.

In some feasible examples, the communication method further includes: The terminal device performs timing or countdown based on the first duration. If the to-be-transmitted data meets a second condition within the first duration, the terminal device stops timing or countdown, where the second condition and the first condition are complementary. Alternatively, when the first duration expires, the terminal device determines that the to-be-transmitted data meets the first condition. In other words, the terminal device may determine, within the first duration, whether the to-be-transmitted data meets the second condition. If the to-be-transmitted data meets the second condition, the terminal device stops timing or countdown. Otherwise, when the first duration expires, the terminal device may determine that the to-be-transmitted data meets the first condition, and the BSR may be triggered. Alternatively, when the first duration expires, the terminal device may determine whether the to-be-transmitted data meets the first condition, to trigger the BSR when the to-be-transmitted data meets the first condition.

In some feasible examples, the first condition may include at least one of the following: The to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, the buffer status information of the to-be-transmitted data is not sent, and the buffer status information of the associated data is not sent. For the first condition other than that the buffer status information of the associated data is not sent, refer to the descriptions of step S101. Details are not described herein again. It may be understood that, that the buffer status information of the associated data is not sent indicates that the buffer status information of the associated data needs to be sent, and the BSR may be triggered. The terminal device may determine, based on at least one item of the first condition, whether to trigger the BSR, to help trigger the BSR in a timely manner.

Correspondingly, in some feasible examples, the second condition may include at least one of the following: The to-be-transmitted data is sent, the data volume of the remaining to-be-transmitted data in the to-be-transmitted data is less than or equal to the first threshold, the proportion of the remaining to-be-transmitted data in the to-be-transmitted data is less than or equal to the second threshold, the buffer status information of the to-be-transmitted data is sent, and the buffer status information of the associated data is sent. For the second condition other than that the buffer status information of the associated data is sent, refer to the descriptions of step S101. Details are not described herein again. It may be understood that, that the buffer status information of the associated data is sent indicates that the BSR has been triggered, and the BSR may no longer be triggered. The terminal device may determine, based on at least one item of the second condition, whether to stop timing or countdown, to help trigger the BSR in a timely manner.

In some feasible examples, the buffer status information further includes at least one of the following: a data volume of remaining to-be-transmitted data, a data volume of remaining to-be-transmitted data other than to-be-transmitted data that arrives latest, an identifier or an indication indicating that to-be-transmitted data exists, a remaining PDB or a remaining PSDB of to-be-transmitted data, and jitter information upon arrival of to-be-transmitted data. In this way, the terminal device may report at least one of the foregoing buffer status information, to help assist the network device in properly allocating a resource and adjusting a scheduling policy in a timely manner, and improve communication quality.

In some feasible examples, when the to-be-transmitted data on the first LCH meets the first condition, the associated data includes an LCH and/or an LCG associated with the first LCH. Alternatively, when the to-be-transmitted data on the second LCH meets the first condition, the associated data includes an LCH and/or an LCG associated with the second LCH. The communication method further includes: The network device sends first information to the terminal device, where the first information indicates the LCH and/or the LCG associated with the first LCH or the second LCH. In this way, the terminal device may determine the associated data based on the LCH or the LCG associated with the DRB, or may determine the associated data based on the first information sent by the network device, so that accuracy of determining the associated data can be improved.

In some feasible examples, the first duration is less than an upper delay limit, and the upper delay limit includes a PDB or a PSDB. In this way, whether to trigger the BSR is determined by using the first duration less than the upper delay limit, to trigger the BSR in a timely manner, avoiding a data loss, helping assist the network device in adjusting a scheduling policy, and improving communication quality.

In some feasible examples, a data type of the to-be-transmitted data includes at least one of the following: data packet, data frame, and data burst.

S302: The terminal device triggers the BSR, to send, to the network device, the buffer status information of the LCH and/or the LCG to which the to-be-transmitted data belongs and the buffer status information of the associated data.

Correspondingly, the network device receives, from the terminal device, the buffer status information of the LCH and/or the LCG to which the to-be-transmitted data belongs and the buffer status information of the associated data. For details, refer to the descriptions of step S202. Details are not described herein again. In addition, when the network device does not configure an uplink resource for the terminal device, or a configured uplink resource is unavailable or insufficient, the buffer status information of the to-be-transmitted data may fail to be sent to the network device by using the BSR. A scheduling request, for example, an SR, may be first sent to the network device, to request to allocate the uplink resource.

In the communication method shown in FIG. 9, after the terminal device receives the first indication from the network device, the terminal device determines, based on the first configuration of the DRB or the first configuration of the first LCH or the second LCH corresponding to the DRB in the first indication after the to-be-transmitted data arrives on the first LCH or the second LCH, whether the to-be-transmitted data meets the first condition when the first duration expires. If the to-be-transmitted data meets the first condition, the BSR may be triggered, and when the BSR is triggered, the buffer status information of the LCH and/or the LCG to which the to-be-transmitted data belongs and the buffer status information of the associated data associated with the LCH to which the to-be-transmitted data belongs are sent to the network device. In this way, the BSR can be triggered in a timely manner, so that a data loss can be avoided. In addition, the buffer status information of the LCH or the LCG to which the to-be-transmitted data belongs and the buffer status information of the associated data are sent, so that the network device can obtain data arrival and buffering of data related to a service that triggers the BSR. This helps assist the network device in adjusting a scheduling policy, and improves communication quality. In addition, sending buffer status information of all LCHs is avoided, so that signaling overheads can be reduced.

The foregoing describes in detail the methods in embodiments of this application. The following provides apparatuses in embodiments of this application.

FIG. 10 is a diagram of a structure of a communication apparatus according to an embodiment of this application. The communication apparatus may include a transceiver unit 101 and a processing unit 102. The transceiver unit 101 may be an apparatus for inputting (receiving) or outputting (sending) a signal, and is configured to perform signal transmission with another network device or another component in a device.

The processing unit 102 may be an apparatus having a processing function, and may include one or more processors. The processor may be a general-purpose processor, a dedicated processor, or the like. The processor may be a baseband processor or a central processing unit. The baseband processor may be configured to process a communication protocol and communication data. The central processing unit may be configured to: control an apparatus (for example, a donor node, a relay node, or a chip), execute a software program, and process data of the software program.

The communication apparatus may include a terminal device or a network device, and may be used in the embodiments of the foregoing three communication methods.

In the first embodiment, when the communication apparatus is the terminal device, the communication apparatus includes:
the transceiver unit 101, configured to receive a first indication from a network device, where the first indication includes a first configuration of a DRB of the terminal device or a first configuration of a first LCH or a second LCH corresponding to the DRB, and the first configuration indicates to trigger a BSR when a first duration expires and to-be-transmitted data on the first LCH or the second LCH meets a first condition; and
the processing unit 102, configured to trigger the BSR, to send buffer status information of a first LCG to a network device, where the first LCG includes an LCG corresponding to the first LCH and an LCG corresponding to the second LCH.

In some feasible examples of the first embodiment, the processing unit 102 in the terminal device is further configured to: perform timing or countdown based on the first duration; and if the to-be-transmitted data meets a second condition within the first duration, stop timing or countdown, where the second condition and the first condition are complementary; or when the first duration expires, determine that the to-be-transmitted data meets the first condition.

In the first embodiment, when the communication apparatus is the network device, the communication apparatus includes:
the transceiver unit 101, configured to send a first indication to a terminal device, where the first indication includes a first configuration of a DRB of the terminal device or a first configuration of a first LCH or a second LCH corresponding to the DRB, and the first configuration indicates to trigger a BSR when a first duration expires and to-be-transmitted data on the first LCH or the second LCH meets a first condition.

The transceiver unit 101 is further configured to receive buffer status information of a first LCG from the terminal device, where the first LCG includes an LCG corresponding to the first LCH and an LCG corresponding to the second LCH.

In some feasible examples of the first embodiment, the first duration is less than an upper delay limit, and the upper delay limit includes a PDB or a PSDB.

In some feasible examples of the first embodiment, the first condition includes at least one of the following: The to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, and buffer status information of the to-be-transmitted data is not sent.

In some feasible examples of the first embodiment, a data type of the to-be-transmitted data includes at least one of the following: data packet, data frame, and data burst.

In the second embodiment, when the communication apparatus is the terminal device, the communication apparatus includes:
the transceiver unit 101, configured to receive a second indication from a network device, where the second indication includes a second configuration of a DRB of the terminal device or a second configuration of a first LCH or a second LCH corresponding to the DRB, the second configuration indicates to report, when to-be-transmitted data on the first LCH or the second LCH meets a BSR trigger condition, buffer status information of the LCH and/or an LCG to which the to-be-transmitted data belongs and buffer status information of associated data associated with the LCH to which the to-be-transmitted data belongs, and the buffer status information includes at least a data volume of to-be-transmitted data that arrives latest; and
the processing unit 102, configured to trigger the BSR, to send, to the network device, the buffer status information of the LCH and/or the LCG to which the to-be-transmitted data belongs and the buffer status information of the associated data.

In some feasible examples of the second embodiment, when the to-be-transmitted data on the first LCH meets the BSR trigger condition, the associated data includes an LCH and/or an LCG associated with the first LCH. Alternatively, when the to-be-transmitted data on the second LCH meets the BSR trigger condition, the associated data includes an LCH and/or an LCG associated with the second LCH. The transceiver unit 101 of the terminal device is further configured to receive first information from the network device, where the first information indicates the LCH and/or the LCG associated with the first LCH or the second LCH. The processing unit 102 of the terminal device is further configured to determine the associated data based on the first information.

In the second embodiment, when the communication apparatus is the network device, the communication apparatus includes:
the transceiver unit 101, configured to send a second indication to a terminal device, where the second indication includes a second configuration of a DRB of the terminal device or a second configuration of a first LCH or a second LCH corresponding to the DRB, the second configuration indicates to report, when to-be-transmitted data on the first LCH or the second LCH meets a BSR trigger condition, buffer status information of the LCH and/or an LCG to which the to-be-transmitted data belongs and buffer status information of associated data associated with the LCH to which the to-be-transmitted data belongs, and the buffer status information includes at least a data volume of to-be-transmitted data that arrives latest.

The transceiver unit 101 is further configured to receive, from the terminal device, the buffer status information of the LCH and/or the LCG to which the to-be-transmitted data belongs and the buffer status information of the associated data.

In some feasible examples of the second embodiment, when the to-be-transmitted data on the first LCH meets the BSR trigger condition, the associated data includes an LCH and/or an LCG associated with the first LCH. Alternatively, when the to-be-transmitted data on the second LCH meets the BSR trigger condition, the associated data includes an LCH and/or an LCG associated with the second LCH. The transceiver unit 101 of the network device is further configured to send first information to the terminal device, where the first information indicates an LCH and/or an LCG associated with the first LCH or the second LCH.

In some feasible examples of the second embodiment, the buffer status information further includes at least one of the following: a data volume of remaining to-be-transmitted data, a data volume of remaining to-be-transmitted data other than the to-be-transmitted data that arrives latest, an identifier or an indication indicating that to-be-transmitted data exists, a remaining PDB or a remaining PSDB of to-be-transmitted data, and jitter information upon arrival of to-be-transmitted data.

In some feasible examples of the second embodiment, a data type of the to-be-transmitted data includes at least one of the following: data packet, data frame, and data burst.

In the third embodiment, when the communication apparatus is the terminal device, the communication apparatus includes:
the transceiver unit 101, configured to receive a first indication from a network device, where the first indication includes a first configuration of a data radio bearer DRB of the terminal device or a first configuration of a first logical channel LCH or a second LCH corresponding to the DRB, the first configuration indicates to trigger a buffer status report BSR when a first duration expires and to-be-transmitted data on the first LCH or the second LCH meets a first condition, the first configuration further indicates to report, when the BSR is triggered, buffer status information of the LCH and/or an LCG to which the to-be-transmitted data belongs and buffer status information of associated data associated with the LCH to which the to-be-transmitted data belongs, and the buffer status information includes at least a data volume of to-be-transmitted data that arrives latest; and
the processing unit 102, configured to trigger the BSR, to send, to the network device, the buffer status information of the LCH and/or the LCG to which the to-be-transmitted data belongs and the buffer status information of the associated data.

In some feasible examples of the third embodiment, the processing unit 102 in the terminal device is further configured to: perform timing or countdown based on the first duration; and if the to-be-transmitted data meets a second condition within the first duration, stop timing or countdown, where the second condition and the first condition are complementary; or when the first duration expires, determine that the to-be-transmitted data meets the first condition.

In some feasible examples of the third embodiment, when the to-be-transmitted data on the first LCH meets the BSR trigger condition, the associated data includes an LCH and/or an LCG associated with the first LCH. Alternatively, when the to-be-transmitted data on the second LCH meets the BSR trigger condition, the associated data includes an LCH and/or an LCG associated with the second LCH. The transceiver unit 101 of the terminal device is further configured to receive first information from the network device, where the first information indicates the LCH and/or the LCG associated with the first LCH or the second LCH. The processing unit 102 of the terminal device is further configured to determine the associated data based on the first information.

In the third embodiment, when the communication apparatus is the network device, the communication apparatus includes:
the transceiver unit 101, configured to send a first indication to a terminal device, where the first indication includes a first configuration of a DRB of the terminal device or a first configuration of a first LCH or a second LCH corresponding to the DRB, the first configuration indicates to trigger a BSR when a first duration expires and to-be-transmitted data on the first LCH or the second LCH meets a first condition, the first configuration further indicates to report, when the BSR is triggered, buffer status information of the LCH and/or an LCG to which the to-be-transmitted data belongs and buffer status information of associated data associated with the LCH to which the to-be-transmitted data belongs, and the buffer status information includes at least a data volume of to-be-transmitted data that arrives latest.

The transceiver unit 101 is further configured to receive, from the terminal device, the buffer status information of the LCH and/or the LCG to which the to-be-transmitted data belongs and the buffer status information of the associated data.

In some feasible examples of the third embodiment, when the to-be-transmitted data on the first LCH meets the BSR trigger condition, the associated data includes an LCH and/or an LCG associated with the first LCH. Alternatively, when the to-be-transmitted data on the second LCH meets the BSR trigger condition, the associated data includes an LCH and/or an LCG associated with the second LCH. The transceiver unit 101 of the network device is further configured to send first information to the terminal device, where the first information indicates the LCH and/or the LCG associated with the first LCH or the second LCH.

In some feasible examples of the third embodiment, the first duration is less than an upper delay limit, and the upper delay limit includes a packet delay budget PDB or a protocol data unit set delay budget PSDB.

In some feasible examples of the third embodiment, the first condition includes at least one of the following: The to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, the buffer status information of the to-be-transmitted data is not sent, and the buffer status information of the associated data is not sent.

In some feasible examples of the third embodiment, a data type of the to-be-transmitted data includes at least one of the following: data packet, data frame, and data burst.

It should be noted that, for an implementation of each unit, refer to corresponding descriptions of the method embodiment shown in FIG. 5, FIG. 7, or FIG. 9.

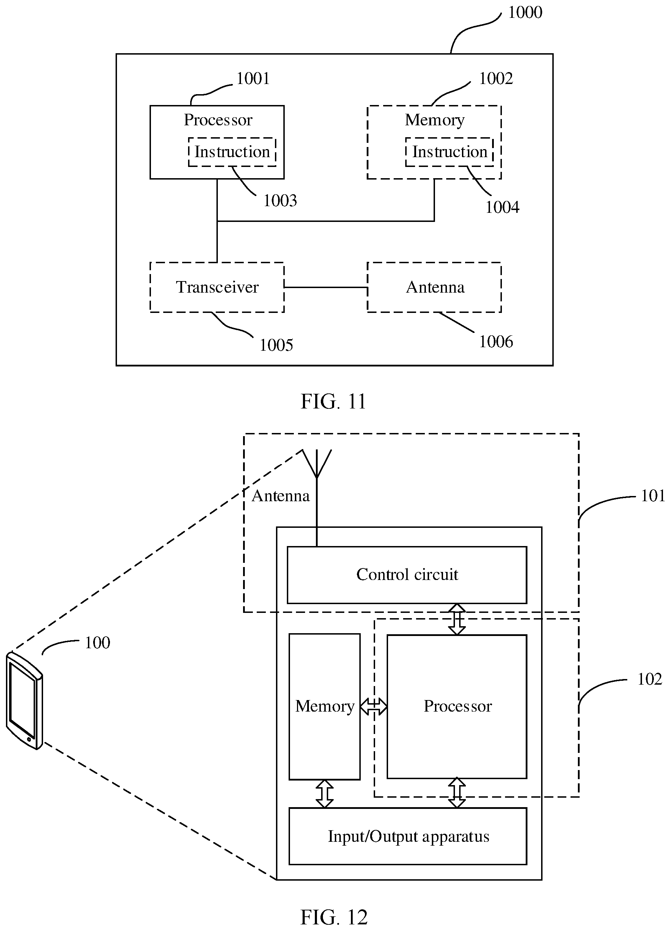

FIG. 11 is a diagram of a structure of another communication apparatus according to an embodiment of this application. As shown in FIG. 11, the communication apparatus 1000 may include one or more processors 1001. The processor 1001 may also be referred to as a processing unit, and may implement a corresponding control function. The processor 1001 may be a general-purpose processor, a dedicated processor, or the like. For example, the processor 1101 may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program.

In an optional design, the processor 1001 may also store an instruction 1003, and the instruction 1003 may be run on the processor 1001, so that the communication apparatus 1000 performs the communication method described in the foregoing method embodiments.

In another optional design, the processor 1001 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the communication apparatus 1000 may include a circuit, and the circuit may implement a sending, receiving, or communication function in the foregoing communication method embodiments.

Optionally, the communication apparatus 1000 may include one or more memories 1002. The memory 1002 may store an instruction 1004, and the instruction 1004 may be run on the processor 1001, so that the communication apparatus 1000 performs the communication method described in the foregoing method embodiments. Optionally, the memory may further store data. Optionally, the processor 1001 may also store instructions and/or data. The processor 1001 and the memory 1002 may be separately disposed, or may be integrated together. For example, the correspondence described in the foregoing method embodiments may be stored in the memory 1002 or stored in the processor 1001.

Optionally, the communication apparatus 1000 may further include a transceiver 1005 and/or an antenna 1006. The processor 1001 may be referred to as a processing unit, and controls the communication apparatus 1000. The transceiver 1005 may be referred to as a transceiver unit, a transceiver, a transceiver circuit, a transceiver apparatus, a transceiver module, or the like, and is configured to implement a transceiver function.

Optionally, the communication apparatus 1000 in this embodiment of this application may be configured to perform the steps described in at least one communication method in FIG. 5, FIG. 7, or FIG. 9 in embodiments of this application.

In a possible case, the communication apparatus 1000 may be a terminal device, or may be an apparatus (for example, a chip, a chip system, or a circuit) in the terminal device or an apparatus that can be used with the terminal device in a matching manner. When the computer program instruction stored in the memory 1002 is executed, the transceiver 1005 is configured to perform an operation performed by the transceiver unit 101 in the foregoing embodiment, and the transceiver 1005 is further configured to send information to a communication apparatus other than the communication apparatus. The terminal device may be further configured to perform various communication methods performed by the terminal device in the method embodiment shown in FIG. 5, FIG. 7, or FIG. 9. Details are not described again.

In a possible case, the communication apparatus 1000 may be a network device, for example, an access network device or a core network device, or an access and mobility management function network element, a session management function network element, or a user plane function network element in the core network device; or may be an apparatus (for example, a chip, a chip system, or a circuit) in the network device or an apparatus that can be used with the network device in a matching manner. When the computer program instruction stored in the memory 1002 is executed, the transceiver 1005 is configured to receive information from a communication apparatus other than the communication apparatus 1000, and the transceiver 1005 is further configured to perform an operation performed by the transceiver unit 101 in the foregoing embodiment. The network device may be further configured to perform various communication methods performed by the network device in the method embodiment shown in FIG. 5, FIG. 7, or FIG. 9. Details are not described again.

The processor and the transceiver described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (N-type metal oxide semiconductor, NMOS), a P-type metal oxide semiconductor (P-type metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiment may be the network device or the terminal device. However, a scope of the communication apparatus described in this application is not limited thereto, and a structure of the communication apparatus may not be limited by FIG. 11. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may further include a storage component configured to store data and/or instructions;
(3) an ASIC, for example, a mobile station modem (mobile station modem, MSM);
(4) a module that can be embedded in another device;
(5) others, or the like.

FIG. 12 is a diagram of a structure of a terminal device according to an embodiment of this application. For ease of description, FIG. 12 shows only main components of the terminal device. As shown in FIG. 12, the terminal device 100 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and the data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

After the terminal device is powered on, the processor may read the software program in the storage unit, parse and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form through the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 12 shows only one memory and one processor. An actual terminal may include a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data, and the central processing unit is mainly configured to control the entire terminal, execute the software program, and process the data of the software program. Functions of the baseband processor and the central processing unit are integrated into the processor in FIG. 12. A person skilled in the art may understand that the baseband processor and the central processing unit each may alternatively be processors independent of each other, and are interconnected by using a technology such as a bus. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a software program form, and the processor executes the software program to implement a baseband processing function.

In an example, an antenna and a control circuit that have a transceiver function may be considered as a transceiver unit 101 of the terminal device 100, and a processor that has a processing function may be considered as a processing unit 102 of the terminal device 100. As shown in FIG. 12, the terminal device 100 includes the transceiver unit 101 and the processing unit 102. The transceiver unit may also be referred to as a transceiver, a transceiver machine, a transceiver apparatus, or the like. Optionally, a component that is in the transceiver unit 101 and that is configured to implement a receiving function may be considered as a receiving unit, and a component that is in the transceiver unit 101 and that is configured to implement a sending function may be considered as a sending unit. In other words, the transceiver unit 101 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one unit integrated together, or may be a plurality of units independent of each other. The receiving unit and the sending unit may be located in one geographical location, or may be distributed in plurality of geographical locations.

In an embodiment, the transceiver unit 101 is configured to perform an operation performed by the transceiver unit 101 in FIG. 10, and the processing unit 102 is configured to perform an operation performed by the processing unit 102 in FIG. 10. The terminal device 100 may be further configured to perform various methods performed by the terminal device in the embodiment in FIG. 5, FIG. 7, or FIG. 9. Details are not described again.

An embodiment of this application further provides a computer-readable storage medium. The computer-readable storage medium stores a computer program. When the computer program is run on one or more processors, one or more steps in any one of the foregoing communication methods are implemented.

An embodiment of this application further provides a computer program product. The computer program product is configured to store a computer program. When the computer program is run on a computer, the computer or a processor is enabled to perform one or more steps in any one of the foregoing communication methods. When component modules of the foregoing device are implemented in a form of a software functional unit and sold or used as an independent product, the component modules may be stored in a computer-readable storage medium.

An embodiment of this application further discloses a communication system. The communication system includes at least one terminal device and at least one network device. When the at least one terminal device and the at least one network device run in the communication system, the at least one terminal device and the at least one network device are configured to perform one or more steps in any one of the foregoing communication methods.

An embodiment of this application further provides a first chip, including a processor and a memory. The processor is configured to invoke, from the memory, instructions stored in the memory and run the instructions, so that a device on which the chip is mounted performs one or more steps in any one of the foregoing communication methods.

An embodiment of this application further provides a second chip, including an input interface, an output interface, and a processing circuit. The input interface, the output interface, and the processing circuit are connected through an internal connection path, and the processing circuit is configured to perform one or more steps in any one of the foregoing communication methods.

An embodiment of this application further provides a third chip, including an input interface, an output interface, and a processor, and optionally, further including a memory. The input interface, the output interface, the processor, and the memory are connected through an internal connection path, and the processor is configured to execute code in the memory. When the code is executed, the processor is configured to perform one or more steps in any one of the foregoing communication methods.

An embodiment of this application further provides a chip system. The chip system includes at least one processor, a memory, and an interface circuit. The memory, a transceiver, and the at least one processor are interconnected through a line, and the at least one memory stores instructions. When the instructions are executed by the processor, one or more steps in any one of the foregoing communication methods are implemented.

In conclusion, through implementation of embodiments of this application, after the terminal device receives the first indication from the network device, the terminal device determines, based on the first configuration of the DRB or the first configuration of the first LCH or the second LCH corresponding to the DRB in the first indication after the to-be-transmitted data arrives on the first LCH or the second LCH, whether the to-be-transmitted data meets the first condition when the first duration expires. If the to-be-transmitted data meets the first condition, the BSR may be triggered. In this way, the BSR can be triggered in a timely manner, so that a data loss can be avoided. In addition, when the BSR is triggered, the buffer status information of the LCH and/or the LCG to which the to-be-transmitted data that meets the first condition belongs and the buffer status information of the associated data may be further sent to the network device, so that the network device can obtain data arrival and buffering of data related to a service that triggers the BSR. This helps assist the network device in adjusting a scheduling policy, and improves communication quality. In addition, sending buffer status information of all LCHs is avoided, so that signaling overheads can be reduced.

It should be understood that the memory mentioned in embodiments of this application may be a volatile memory or a nonvolatile memory, or may include both the volatile memory and the nonvolatile memory. The nonvolatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and the volatile memory is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction structure or a data structure and that can be accessed by a computer, but is not limited herein. The memory in embodiments of this application may alternatively be a circuit or any other apparatus that can implement a storage function, and is configured to store program instructions and/or data.

It should be further understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is the general-purpose processor, the DSP, the ASIC, the FPGA or the another programmable logic device, the discrete gate or the transistor logic device, or the discrete hardware component, the memory (storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that the units and algorithm steps in the examples described with reference to embodiments provided in this specification may be implemented by electronic hardware or a combination of computer software and electronic hardware. Whether these functions are performed in a hardware or software manner depends on specific applications and design constraint conditions of the technical solutions. A person skilled in the art may use different methods to implement the described functions for each specific application. However, it should not be considered that this implementation goes beyond the scope of this application.

It may be clearly understood by a person skilled in the art that, for the purpose of convenient and brief description, for specific working processes of the foregoing systems, apparatuses, and units, refer to corresponding processes in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. A part or all of the units may be selected based on an actual requirement to achieve objectives of the solutions in the embodiments.

In addition, functional units in embodiments of this application may be integrated into one processing unit, or each unit may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, or the part contributing to the conventional technology, or some of the technical solutions may be implemented in the form of the software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the methods in embodiments of this application may be adjusted, combined, or removed based on an actual requirement.

The modules/units in the apparatuses in embodiments of this application may be combined, divided, and deleted based on an actual requirement.

In descriptions of this application, "/" indicates "or", unless otherwise specified. For example, A/B may indicate A or B. In this application, "and/or" describes only an association relationship between associated objects and represents that three relationships may exist. For example, A and/or B may represent the following three cases: Only A exists, both A and B exist, and only B exists. In addition, "at least one" may mean one or more, and "a plurality of" may mean two or more. Terms such as "first" and "second" do not limit a quantity and an execution sequence, and the terms such as "first" and "second" do not indicate a definite difference. "Indication" may include a direct indication and an indirect indication, or may include an explicit indication and an implicit indication.

It should be noted that in this application, terms such as "example" or "for example" represents giving an example, an illustration, or a description. Any embodiment or design scheme described as an "example" or "for example" in this application should not be understood as being more preferred or having more advantages than another embodiment or design scheme. Exactly, use of the word such as "example" or "for example" is intended to present a related concept in a specific manner.

The foregoing embodiments are merely used to describe the technical solutions of this application, but not to limit the technical solutions. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, comprising:
receiving, by a terminal device, a first indication from a network device, wherein the first indication comprises a first configuration of a data radio bearer DRB of the terminal device or a first configuration of a first logical channel LCH or a second LCH corresponding to the DRB, and the first configuration indicates to trigger a buffer status report BSR when a first duration expires and to-be-transmitted data on the first LCH or the second LCH meets a first condition; and
triggering, by the terminal device, the BSR.

2. The communication method according to claim 1, further comprising:
performing, by the terminal device, timing or countdown based on the first duration; and
if the to-be-transmitted data meets a second condition within the first duration, stopping, by the terminal device, timing or countdown, wherein the second condition and the first condition are complementary; or
when the first duration expires, determining, by the terminal device, that the to-be-transmitted data meets the first condition.

3. The communication method according to claim 1 or 2, wherein the first duration is less than an upper delay limit, and the upper delay limit comprises a packet delay budget PDB or a protocol data unit set delay budget PSDB.

4. The communication method according to any one of claims 1 to 3, wherein the first condition comprises at least one of the following: the to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, or buffer status information of the to-be-transmitted data is not sent.

5. The communication method according to claim 4, wherein the first configuration further indicates to report, when the BSR is triggered, buffer status information of the LCH and/or an LCG to which the to-be-transmitted data belongs and buffer status information of associated data associated with the LCH to which the to-be-transmitted data belongs, and the buffer status information comprises at least a data volume of to-be-transmitted data that arrives latest.

6. The communication method according to claim 5, wherein the buffer status information further comprises at least one of the following:
a data volume of remaining to-be-transmitted data;
a data volume of remaining to-be-transmitted data other than the to-be-transmitted data that arrives latest;
an identifier or an indication indicating that to-be-transmitted data exists;
a remaining PDB or a remaining PSDB of to-be-transmitted data; and
jitter information upon arrival of to-be-transmitted data.

7. The communication method according to claim 5 or 6, wherein when the to-be-transmitted data on the first LCH meets the first condition, the associated data comprises an LCH and/or an LCG associated with the first LCH; or when the to-be-transmitted data on the second LCH meets the first condition, the associated data comprises an LCH and/or an LCG associated with the second LCH; and
the communication method further comprises:
receiving, by the terminal device, first information from the network device, wherein the first information indicates the LCH and/or the LCG associated with the first LCH or the second LCH; and
determining, by the terminal device, the associated data based on the first information.

8. The communication method according to any one of claims 5 to 7, wherein the first condition further comprises that the buffer status information of the associated data is not sent.

9. The communication method according to any one of claims 1 to 8, wherein a data type of the to-be-transmitted data comprises at least one of the following: data packet, data frame, and data burst.

10. A communication method, comprising:
sending, by a network device, a first indication to a terminal device, wherein the first indication comprises a first configuration of a DRB of the terminal device or a first configuration of a first LCH or a second LCH corresponding to the DRB, and the first configuration indicates to trigger a BSR when a first duration expires and to-be-transmitted data on the first LCH or the second LCH meets a first condition; and
receiving, by the network device, buffer status information of a first LCG from the terminal device, wherein the first LCG comprises an LCG corresponding to the first LCH and an LCG corresponding to the second LCH.

11. The communication method according to claim 10, wherein the first condition comprises at least one of the following: the to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, and buffer status information of the to-be-transmitted data is not sent.

12. A communication method, comprising:
sending, by a network device, a first indication to a terminal device, wherein the first indication comprises a first configuration of a DRB of the terminal device or a first configuration of a first LCH or a second LCH corresponding to the DRB, the first configuration indicates to trigger a BSR when a first duration expires and to-be-transmitted data on the first LCH or the second LCH meets a first condition, the first configuration further indicates to report, when the BSR is triggered, buffer status information of the LCH and/or an LCG to which the to-be-transmitted data belongs and buffer status information of associated data associated with the LCH to which the to-be-transmitted data belongs, and the buffer status information comprises at least a data volume of to-be-transmitted data that arrives latest; and
receiving, by the network device from the terminal device, the buffer status information of the LCH and/or the LCG to which the to-be-transmitted data belongs and the buffer status information of the associated data.

13. The communication method according to claim 12, wherein the buffer status information further comprises at least one of the following:
a data volume of remaining to-be-transmitted data;
a data volume of remaining to-be-transmitted data other than the to-be-transmitted data that arrives latest;
an identifier or an indication indicating that to-be-transmitted data exists;
a remaining PDB or a remaining PSDB of to-be-transmitted data; and
jitter information upon arrival of to-be-transmitted data.

14. The communication method according to claim 12 or 13, wherein when the to-be-transmitted data on the first LCH meets the first condition, the associated data comprises an LCH and/or an LCG associated with the first LCH; or when the to-be-transmitted data on the second LCH meets the first condition, the associated data comprises an LCH and/or an LCG associated with the second LCH; and
the communication method further comprises:
sending, by the network device, first information to the terminal device, wherein the first information indicates the LCH and/or the LCG associated with the first LCH or the second LCH.

15. The communication method according to any one of claims 12 to 14, wherein the first condition comprises at least one of the following: the to-be-transmitted data is not sent, the data volume of the remaining to-be-transmitted data in the to-be-transmitted data is greater than a first threshold, a proportion of the remaining to-be-transmitted data in the to-be-transmitted data is greater than a second threshold, buffer status information of the to-be-transmitted data is not sent, and the buffer status information of the associated data is not sent.

16. The communication method according to any one of claims 10 to 15, wherein the first duration is less than an upper delay limit, and the upper delay limit comprises a PDB or a PSDB.

17. The communication method according to any one of claims 10 to 16, wherein a data type of the to-be-transmitted data comprises at least one of the following: data packet, data frame, and data burst.

18. A communication method, comprising:
receiving, by a terminal device, a second indication from a network device, wherein the second indication comprises a second configuration of a DRB of the terminal device or a second configuration of a first LCH or a second LCH corresponding to the DRB, the second configuration indicates to report, when to-be-transmitted data on the first LCH or the second LCH meets a BSR trigger condition, buffer status information of the LCH and/or an LCG to which the to-be-transmitted data belongs and buffer status information of associated data associated with the LCH to which the to-be-transmitted data belongs, and the buffer status information comprises at least a data volume of to-be-transmitted data that arrives latest; and
triggering, by the terminal device, a BSR, to send, to the network device, the buffer status information of the LCH and/or the LCG to which the to-be-transmitted data belongs and the buffer status information of the associated data.

19. The communication method according to claim 18, wherein the buffer status information further comprises at least one of the following:
a data volume of remaining to-be-transmitted data;
a data volume of remaining to-be-transmitted data other than the to-be-transmitted data that arrives latest;
an identifier or an indication indicating that to-be-transmitted data exists;
a remaining PDB or a remaining PSDB of to-be-transmitted data; and
jitter information upon arrival of to-be-transmitted data.

20. The communication method according to claim 18 or 19, wherein when the to-be-transmitted data on the first LCH meets the trigger condition, the associated data comprises an LCH and/or an LCG associated with the first LCH; or when the to-be-transmitted data on the second LCH meets the trigger condition, the associated data comprises an LCH and/or an LCG associated with the second LCH; and
the communication method further comprises:
receiving, by the terminal device, first information from the network device, wherein the first information indicates the LCH and/or the LCG associated with the first LCH or the second LCH; and
determining, by the terminal device, the associated data based on the first information.

21. The communication method according to any one of claims 18 to 20, wherein a data type of the to-be-transmitted data comprises at least one of the following: data packet, data frame, and data burst.

22. A communication method, comprising:
sending, by a network device, a second indication to a terminal device, wherein the second indication comprises a second configuration of a DRB of the terminal device or a second configuration of a first LCH or a second LCH corresponding to the DRB, the second configuration indicates to report, when to-be-transmitted data on the first LCH or the second LCH meets a BSR trigger condition, buffer status information of the LCH and/or an LCG to which the to-be-transmitted data belongs and buffer status information of associated data associated with the LCH to which the to-be-transmitted data belongs, and the buffer status information comprises at least a data volume of to-be-transmitted data that arrives latest; and
receiving, by the network device from the terminal device, the buffer status information of the LCH and/or the LCG to which the to-be-transmitted data belongs and the buffer status information of the associated data.

23. The communication method according to claim 22, wherein the buffer status information further comprises at least one of the following:
a data volume of remaining to-be-transmitted data;
a data volume of remaining to-be-transmitted data other than the to-be-transmitted data that arrives latest;
an identifier or an indication indicating that to-be-transmitted data exists;
a remaining PDB or a remaining PSDB of to-be-transmitted data; and
jitter information upon arrival of to-be-transmitted data.

24. The communication method according to claim 22 or 23, wherein when the to-be-transmitted data on the first LCH meets the trigger condition, the associated data comprises an LCH and/or an LCG associated with the first LCH; or when the to-be-transmitted data on the second LCH meets the trigger condition, the associated data comprises an LCH and/or an LCG associated with the second LCH; and
the communication method further comprises:
sending, by the network device, first information to the terminal device, wherein the first information indicates the LCH and/or the LCG associated with the first LCH or the second LCH.

25. The communication method according to any one of claims 22 to 24, wherein a data type of the to-be-transmitted data comprises at least one of the following: data packet, data frame, and data burst.

26. A communication apparatus, comprising:
a transceiver unit, configured to receive a first indication from a network device, wherein the first indication comprises a first configuration of a data radio bearer DRB of the terminal device or a first configuration of a first logical channel LCH or a second LCH corresponding to the DRB, and the first configuration indicates to trigger a buffer status report BSR when a first duration expires and to-be-transmitted data on the first LCH or the second LCH meets a first condition; and
a processing unit, configured to trigger the BSR.

27. The apparatus according to claim 26, wherein the processing unit is further configured to:
perform timing or countdown based on the first duration; and
if the to-be-transmitted data meets a second condition within the first duration, stop timing or countdown, wherein the second condition and the first condition are complementary; or
when the first duration expires, determine that the to-be-transmitted data meets the first condition.

28. The apparatus according to claim 26 or 27, wherein the first duration is less than an upper delay limit, and the upper delay limit comprises a packet delay budget PDB or a protocol data unit set delay budget PSDB.

29. The apparatus according to any one of claims 26 to 28, wherein the first condition comprises at least one of the following: the to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, and buffer status information of the to-be-transmitted data is not sent.

30. The apparatus according to claim 29, wherein the first configuration further indicates to report, when the BSR is triggered, buffer status information of the LCH and/or an LCG to which the to-be-transmitted data belongs and buffer status information of associated data associated with the LCH to which the to-be-transmitted data belongs, and the buffer status information comprises at least a data volume of to-be-transmitted data that arrives latest.

31. The apparatus according to claim 30, wherein the buffer status information further comprises at least one of the following:
a data volume of remaining to-be-transmitted data;
a data volume of remaining to-be-transmitted data other than the to-be-transmitted data that arrives latest;
an identifier or an indication indicating that to-be-transmitted data exists;
a remaining PDB or a remaining PSDB of to-be-transmitted data; and
jitter information upon arrival of to-be-transmitted data.

32. The apparatus according to claim 30 or 31, wherein when the to-be-transmitted data on the first LCH meets the first condition, the associated data comprises an LCH and/or an LCG associated with the first LCH; or when the to-be-transmitted data on the second LCH meets the first condition, the associated data comprises an LCH and/or an LCG associated with the second LCH;
the transceiver unit is further configured to receive first information from the network device, wherein the first information indicates the LCH and/or the LCG associated with the first LCH or the second LCH; and
the processing unit is further configured to determine the associated data based on the first information.

33. The apparatus according to any one of claims 30 to 32, wherein the first condition further comprises that the buffer status information of the associated data is not sent.

34. The apparatus according to any one of claims 26 to 33, wherein a data type of the to-be-transmitted data comprises at least one of the following: data packet, data frame, and data burst.

35. A communication apparatus, comprising:
a transceiver unit, configured to send a first indication to a terminal device, wherein the first indication comprises a first configuration of a DRB of the terminal device or a first configuration of a first LCH or a second LCH corresponding to the DRB, and the first configuration indicates to trigger a BSR when a first duration expires and to-be-transmitted data on the first LCH or the second LCH meets a first condition, wherein
the transceiver unit is further configured to receive buffer status information of a first LCG from the terminal device, wherein the first LCG comprises an LCG corresponding to the first LCH and an LCG corresponding to the second LCH.

36. The apparatus according to claim 35, wherein the first condition comprises at least one of the following: the to-be-transmitted data is not sent, a data volume of remaining to-be-transmitted data in the to-be-transmitted data is greater than a first threshold, a proportion of the remaining to-be-transmitted data in the to-be-transmitted data is greater than a second threshold, and buffer status information of the to-be-transmitted data is not sent.

37. A communication apparatus, comprising:
a transceiver unit, configured to send a first indication to a terminal device, wherein the first indication comprises a first configuration of a DRB of the terminal device or a first configuration of a first LCH or a second LCH corresponding to the DRB, the first configuration indicates to trigger a BSR when a first duration expires and to-be-transmitted data on the first LCH or the second LCH meets a first condition, the first configuration further indicates to report, when the BSR is triggered, buffer status information of the LCH and/or an LCG to which the to-be-transmitted data belongs and buffer status information of associated data associated with the LCH to which the to-be-transmitted data belongs, and the buffer status information comprises at least a data volume of to-be-transmitted data that arrives latest, wherein
the transceiver unit is further configured to receive, from the terminal device, the buffer status information of the LCH and/or the LCG to which the to-be-transmitted data belongs and the buffer status information of the associated data.

38. The apparatus according to claim 37, wherein the buffer status information further comprises at least one of the following:
a data volume of remaining to-be-transmitted data;
a data volume of remaining to-be-transmitted data other than the to-be-transmitted data that arrives latest;
an identifier or an indication indicating that to-be-transmitted data exists;
a remaining PDB or a remaining PSDB of to-be-transmitted data; and
jitter information upon arrival of to-be-transmitted data.

39. The apparatus according to claim 37 or 38, wherein when the to-be-transmitted data on the first LCH meets the first condition, the associated data comprises an LCH and/or an LCG associated with the first LCH; or when the to-be-transmitted data on the second LCH meets the first condition, the associated data comprises an LCH and/or an LCG associated with the second LCH; and
the transceiver unit is further configured to send first information to the terminal device, wherein the first information indicates the LCH and/or the LCG associated with the first LCH or the second LCH.

40. The apparatus according to any one of claims 37 to 39, wherein the first condition comprises at least one of the following: the to-be-transmitted data is not sent, the data volume of the remaining to-be-transmitted data in the to-be-transmitted data is greater than a first threshold, a proportion of the remaining to-be-transmitted data in the to-be-transmitted data is greater than a second threshold, buffer status information of the to-be-transmitted data is not sent, and the buffer status information of the associated data is not sent.

41. The apparatus according to any one of claims 35 to 40, wherein the first duration is less than an upper delay limit, and the upper delay limit comprises a PDB or a PSDB.

42. The apparatus according to any one of claims 35 to 41, wherein a data type of the to-be-transmitted data comprises at least one of the following: data packet, data frame, and data burst.

43. A communication apparatus, comprising:
a transceiver unit, configured to receive a second indication from a network device, wherein the second indication comprises a second configuration of a DRB of the terminal device or a second configuration of a first LCH or a second LCH corresponding to the DRB, the second configuration indicates to report, when to-be-transmitted data on the first LCH or the second LCH meets a BSR trigger condition, buffer status information of the LCH and/or an LCG to which the to-be-transmitted data belongs and buffer status information of associated data associated with the LCH to which the to-be-transmitted data belongs, and the buffer status information comprises at least a data volume of to-be-transmitted data that arrives latest; and
a processing unit, configured to trigger a BSR, to send, to the network device, the buffer status information of the LCH and/or the LCG to which the to-be-transmitted data belongs and the buffer status information of the associated data.

44. The apparatus according to claim 43, wherein the buffer status information further comprises at least one of the following:
a data volume of remaining to-be-transmitted data;
a data volume of remaining to-be-transmitted data other than the to-be-transmitted data that arrives latest;
an identifier or an indication indicating that to-be-transmitted data exists;
a remaining PDB or a remaining PSDB of to-be-transmitted data; and
jitter information upon arrival of to-be-transmitted data.

45. The apparatus according to claim 43 or 44, wherein when the to-be-transmitted data on the first LCH meets the trigger condition, the associated data comprises an LCH and/or an LCG associated with the first LCH; or when the to-be-transmitted data on the second LCH meets the trigger condition, the associated data comprises an LCH and/or an LCG associated with the second LCH;
the transceiver unit is further configured to receive first information from the network device, wherein the first information indicates the LCH and/or the LCG associated with the first LCH or the second LCH; and
the processing unit is further configured to determine the associated data based on the first information.

46. The apparatus according to any one of claims 43 to 45, wherein a data type of the to-be-transmitted data comprises at least one of the following: data packet, data frame, and data burst.

47. A communication apparatus, comprising:
a transceiver unit, configured to send a second indication to a terminal device, wherein the second indication comprises a second configuration of a DRB of the terminal device or a second configuration of a first LCH or a second LCH corresponding to the DRB, the second configuration indicates to report, when to-be-transmitted data on the first LCH or the second LCH meets a BSR trigger condition, buffer status information of the LCH and/or an LCG to which the to-be-transmitted data belongs and buffer status information of associated data associated with the LCH to which the to-be-transmitted data belongs, and the buffer status information comprises at least a data volume of to-be-transmitted data that arrives latest, wherein
the transceiver unit is further configured to receive, from the terminal device, the buffer status information of the LCH and/or the LCG to which the to-be-transmitted data belongs and the buffer status information of the associated data.

48. The apparatus according to claim 47, wherein the buffer status information further comprises at least one of the following:
a data volume of remaining to-be-transmitted data;
a data volume of remaining to-be-transmitted data other than the to-be-transmitted data that arrives latest;
an identifier or an indication indicating that to-be-transmitted data exists;
a remaining PDB or a remaining PSDB of to-be-transmitted data; and
jitter information upon arrival of to-be-transmitted data.

49. The apparatus according to claim 47 or 48, wherein when the to-be-transmitted data on the first LCH meets the trigger condition, the associated data comprises an LCH and/or an LCG associated with the first LCH; or when the to-be-transmitted data on the second LCH meets the trigger condition, the associated data comprises an LCH and/or an LCG associated with the second LCH; and
the transceiver unit is further configured to send first information to the terminal device, wherein the first information indicates the LCH and/or the LCG associated with the first LCH or the second LCH.

50. The apparatus according to any one of claims 47 to 49, wherein a data type of the to-be-transmitted data comprises at least one of the following: data packet, data frame, and data burst.

51. A communication apparatus, comprising a processor, wherein the processor is configured to execute instructions stored in a memory, and when the instructions are executed, the communication method according to any one of claims 1 to 25 is implemented.

52. The communication apparatus according to claim 51, further comprising one or more of the memory and a transceiver, wherein the transceiver is configured to receive and send data and/or signaling.

53. A computer-readable storage medium, wherein the computer-readable storage medium stores a computer program, and when the computer program is run on one or more processors, the method according to any one of claims 1 to 25 is implemented.
